(19) **Europäisches Patentamt**
**European Patent Office**
**Office européen des brevets**

(11) **EP 4 510 674 A1**

(12) **EUROPEAN PATENT APPLICATION**
published in accordance with Art. 153(4) EPC

(43) Date of publication:
**19.02.2025 Bulletin 2025/08**

(51) International Patent Classification (IPC):
**H04W 16/28** (2009.01)

(21) Application number: **23787502.6**

(52) Cooperative Patent Classification (CPC):
**H04L 5/00; H04W 16/28; H04W 72/044**

(22) Date of filing: **27.03.2023**

(86) International application number:
**PCT/CN2023/084159**

(87) International publication number:
**WO 2023/197856 (19.10.2023 Gazette 2023/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.04.2022 CN 202210385010**

(71) Applicant: **ZTE Corporation**
**Shenzhen, Guangdong 518057 (CN)**

(72) Inventors:
• **MIAO, Ting**
**Shenzhen, Guangdong 518057 (CN)**

• **CHEN, Jie**
**Shenzhen, Guangdong 518057 (CN)**
• **LU, Youxiong**
**Shenzhen, Guangdong 518057 (CN)**
• **XING, Weimin**
**Shenzhen, Guangdong 518057 (CN)**
• **HE, Haigang**
**Shenzhen, Guangdong 518057 (CN)**
• **BI, Feng**
**Shenzhen, Guangdong 518057 (CN)**

(74) Representative: **Pennacchio, Salvatore Giovanni**
**Jacobacci & Partners S.p.A.**
**Via Senato, 8**
**20121 Milano (IT)**

(54) **INFORMATION TRANSMISSION METHOD AND APPARATUS, AND STORAGE MEDIUM AND ELECTRONIC APPARATUS**

(57) Proposed are an information transmission method and apparatus, and a storage medium and an electronic apparatus. The information transmission method includes: receiving a first Physical Sidelink Control Channel (PSCCH) or Physical Sidelink Shared Channel (PSSCH), and sending beam feedback information in response to the first PSCCH or PSSCH, wherein the beam feedback information is carried on at least one of: a Physical Sidelink Feedback Channel (PSFCH) resource corresponding to the first PSSCH; and at least one of following pieces of information of a sent second PSCCH or PSSCH: first-stage Sidelink Control Information (SCI-1) information, a Media Access Control-Control Element (MAC CE), and second-stage Sidelink Control Information (SCI-2) information.

**Fig. 2**

Receiving a first PSCCH or PSSCH, and sending beam feedback information in response to the first PSCCH or PSSCH, wherein the beam feedback information is carried on at least one of: a PSFCH resource corresponding to the first PSSCH; and at least one of following pieces of information of a sent second PSCCH or PSSCH: SCI-1 information, MAC CE, SCI-2 information — S202

**Description**

**Cross-Reference to Related Application**

The present disclosure claims priority to Chinese Patent Application No. 202210385010.6, filed with the China National Intellectual Property Administration on April 13, 2022 and entitled "INFORMATION TRANSMISSION METHOD AND APPARATUS, AND STORAGE MEDIUM AND ELECTRONIC APPARATUS", which is incorporated herein by reference in its entirety.

**Technical Field**

The present disclosure relates to the field of communications, and in particular, to an information transmission method and apparatus, and a storage medium and an electronic apparatus.

**Background**

In a New Radio (NR) system, the communication on sidelinks (SL) (i.e., sidelink communication) may be implemented by using a millimeter wave band. Due to the short wavelength and high propagation loss of the millimeter wave band, larger-scale antenna arrays are typically used to transmit data in the form of beams to overcome the propagation loss.

Generally, a transmitting end transmits a signal according to different beams, and a receiving end measures this signal and selects a beam based on a measurement result. The transmitting end needs to be indicated by the receiving end on which or which beams to use when transmitting the signal, that is, the transmitting end requires beam feedback from the receiving end. However, there is currently no beam feedback mechanism for sidelink communication.

Therefore, it may be concluded that the problem in the related art that beam feedback cannot be performed in a sidelink communication remains to be solved.

**Summary**

Embodiments of the present disclosure provide an information transmission method and apparatus, and a storage medium and an electronic apparatus, which may at least solve the problem in the related art that beam feedback cannot be performed in a sidelink communication.

According to an embodiment of the present disclosure, provided is an information transmission method, including: receiving a first Physical Sidelink Control Channel (PSCCH) or Physical Sidelink Shared Channel (PSSCH), and sending beam feedback information in response to the first PSCCH or PSSCH, wherein the beam feedback information is carried on at least one of: a Physical Sidelink Feedback Channel (PSFCH) resource corresponding to the first PSSCH; and at least one of following pieces of information of a sent second PSCCH or PSSCH: first-stage Sidelink Control Information (SCI-1) information, a Media Access Control-Control Element (MAC CE), and second-stage Sidelink Control Information (SCI-2) information.

According to another embodiment of the present disclosure, provided is an information transmission method, including: sending a first Physical Sidelink Control Channel (PSCCH) or Physical Sidelink Shared Channel (PSSCH), and receiving beam feedback information sent in response to the first PSCCH or PSSCH, wherein the beam feedback information is carried on at least one of: a Physical Sidelink Feedback Channel (PSFCH) resource corresponding to the first PSSCH; and at least one of following pieces of information of a sent second PSCCH or PSSCH: first-stage Sidelink Control Information (SCI-1) information, a Media Access Control-Control Element (MAC CE), and second-stage Sidelink Control Information (SCI-2) information.

According to still another embodiment of the present disclosure, provided is an information transmission apparatus, including: a first receiving module, configured to receive a first Physical Sidelink Control Channel (PSCCH) or Physical Sidelink Shared Channel (PSSCH); and a first sending module, configured to send beam feedback information in response to the first PSCCH or PSSCH, wherein the beam feedback information is carried on at least one of: a Physical Sidelink Feedback Channel (PSFCH) resource corresponding to the first PSSCH; and at least one of following pieces of information of a sent second PSCCH or PSSCH: first-stage Sidelink Control Information (SCI-1) information, a Media Access Control-Control Element (MAC CE), and second-stage Sidelink Control Information (SCI-2) information.

According to yet another embodiment of the present disclosure, provided is an information transmission apparatus, including: a second sending module configured to send a first Physical Sidelink Control Channel (PSCCH) or Physical Sidelink Shared Channel (PSSCH); and a second receiving module, configured to receive beam feedback information sent in response to the first PSCCH or PSSCH, wherein the beam feedback information is carried on at least one of: a Physical Sidelink Feedback Channel (PSFCH) resource corresponding to the first PSSCH; and at least one of following pieces of information of a sent second PSCCH or PSSCH: first-stage Sidelink Control Information (SCI-1) information, a Media Access Control-Control Element (MAC CE), and second-stage Sidelink Control Information (SCI-2) information.

According to yet another embodiment of the present disclosure, provided is a computer-readable storage medium, the computer-readable storage medium stores a computer program, and the computer program, when running on a processor, causes the processor to execute the information transmission method according to any of the above embodiments.

According to yet another embodiment of the present disclosure, provided is an electronic apparatus, including a memory and a processor, wherein the memory stores a computer program, and the processor is configured to run the computer program so as to execute the information transmission method according to any of the above embodiments.

By means of the embodiments of the present disclosure, a first PSCCH or PSSCH (also denoted as PSCCH/PSSCH) is received, and beam feedback information is sent in response to the first PSCCH or PSSCH, wherein the beam feedback information is carried on at least one of: a PSFCH resource corresponding to the first PSSCH; and at least one of following pieces of information of a sent second PSCCH or PSSCH: SCI-1 information, a MAC CE, and SCI-2 information. The embodiments of the present disclosure provide a beam feedback manner applied to the sidelink communication, and therefore, the problem in the related art that beam feedback cannot be performed in a sidelink communication can be solved.

## Brief Description of the Drawings

Fig. 1 is a block diagram of the hardware structure of a user terminal for implementing an information transmission method according to an embodiment of the present disclosure;

Fig. 2 is a flowchart of an information transmission method according to an embodiment of the present disclosure;

Fig. 3 is another flowchart of an information transmission method according to an embodiment of the present disclosure;

Fig. 4 is a structural block diagram of an information transmission apparatus according to an embodiment of the present disclosure; and

Fig. 5 is another structural block diagram of an information transmission apparatus according to an embodiment of the present disclosure.

## Detailed Description

The embodiments of the present disclosure will be described below in detail with reference to the accompanying drawings and in conjunction with embodiments.

It should be noted that, terms such as "first" and "second" in the description, claims, and accompanying drawings of the present disclosure are used to distinguish similar objects, but are not necessarily used to describe a specific sequence or order.

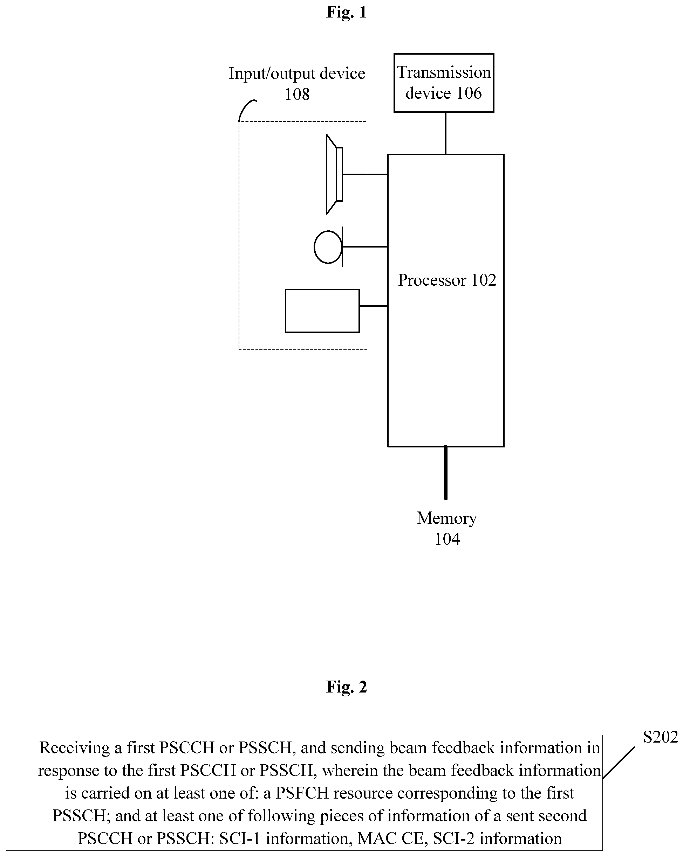

The method embodiments provided in the embodiments of the present disclosure may be executed in a user terminal or a similar arithmetic apparatus. Taking the operation on a user terminal as an example, Fig. 1 is a block diagram of the hardware structure of a user terminal for implementing an information transmission method according to an embodiment of the present disclosure. As shown in Fig. 1, the user terminal may include one or more (only one is shown in Fig. 1) processors 102 (each of the one or more processors 102 may include, but is not limited to, a processing apparatus such as a Micro Controller Unit (MCU) or a Field Programmable Gate Array (FPGA)) and a memory 104 configured to store data. The user terminal may further include a transmission device 106 configured to perform a communication function and an input/output device 108. Those having ordinary skill in the art may understand that the structure shown in Fig. 1 is merely exemplary, which does not limit the structure of the foregoing user terminal. For example, the user terminal may further include more or fewer components than shown in Fig. 1, or have a different configuration from that shown in Fig. 1.

The memory 104 may be configured to store a computer program, for example, a software program and modules of application software, such as a computer program corresponding to the information transmission method in the embodiments of the present disclosure. The one or more processors 102 run the computer program stored in the memory 104, so as to execute various function applications and data processing, that is, to implement the foregoing methods. The memory 104 may include high-speed random access memory, and may also include non-volatile memory, such as one or more magnetic storage apparatuses, flash memory, or other non-volatile solid-state memory. In some examples, the memory 104 may further include a memory remotely located with respect to the one or more processors 102, which may be connected to the user terminal over a network. Examples of such network include, but are not limited to, the Internet, an intranet, a local area network, a mobile communication network, and combinations thereof.

The transmission device 106 is configured to receive or transmit data via a network. Specific examples of the described network may include a wireless network provided by a communication provider of the user terminal. In an example, the transmission device 106 may include a Network Interface Controller (NIC) that may be coupled to other network devices via a base station to communicate with the Internet. In an example, the transmission device 106 may be a Radio Frequency (RF) module configured to communicate wirelessly with the Internet.

The present embodiment provides an information transmission method running on the described user terminal. Fig. 2 is a flowchart of an information transmission method according to an embodiment of the present disclosure. As shown in Fig. 2, the information transmission method includes the following operation S202.

At operation S202, a first PSCCH or PSSCH is received, and beam feedback information is sent in response to the first PSCCH or PSSCH, wherein the beam feedback information is carried on at least one of: a Physical Sidelink Feedback Channel (PSFCH) resource corresponding to the first PSSCH; and at least one of following pieces of information of a sent second PSCCH or PSSCH: SCI-1 information, a MAC CE, and SCI-2 information. The SCI-1 refers to first-stage Sidelink Control Information, and the SCI-2 refers to second-stage Sidelink Control Information. Generally, the SCI-1 is carried on a PSCCH, and the SCI-2 is carried on a PSSCH.

By means of the technical solution provided in the embodiment of the present disclosure, a first PSCCH or PSSCH (also denoted as PSCCH/PSSCH) is received, and beam feedback information is sent in response to the first PSCCH or PSSCH, wherein the beam feedback information is carried on at least one of: a PSFCH resource corresponding to the first PSSCH; and at least one of following pieces of information of a sent second PSCCH or PSSCH: SCI-1 information, a MAC CE, and SCI-2 information. The embodiments of the present disclosure provide a beam feedback manner applied to the sidelink communication, and therefore, the problem in the related art that beam feedback cannot be performed in a sidelink communication can be solved.

In an exemplary embodiment, the information transmission method may further include: in a case where the beam feedback information is carried on the PSFCH resource corresponding to the first PSSCH, the beam feedback information is indicated through a cyclic shift of a sequence, wherein the beam feedback information includes whether a beam corresponding to the first PSCCH or PSSCH satisfies a requirement.

In an exemplary embodiment, the information transmission method may further include: in a case where a measurement parameter value of a reference signal corresponding to the first PSSCH or the first PSCCH associated with the first PSSCH is greater than a threshold, it is determined that the beam corresponding to the first PSCCH or PSSCH satisfies the requirement; and in a case where the measurement parameter value of the reference signal corresponding to the first PSSCH or the first PSCCH associated with the first PSSCH is smaller than the threshold, it is determined that the beam corresponding to the first PSCCH or PSSCH does not satisfy the requirement.

In an exemplary embodiment, the information transmission method may further include: a User Equipment (UE) determines, according to PSFCH resource configuration information used for beam feedback, $R_{PRB,CS}^{PSFCH}$ PSFCH resources corresponding to the first PSSCH, wherein the $R_{PRB,CS}^{PSFCH}$ PSFCH resources are sequentially numbered firstly according to physical resource block indexes and then according to cyclic shift pair indexes; and

the UE determines a PSFCH resource index used for beam feedback as $(P_{ID} + M_{ID}) \bmod R_{PRB, CS}^{PSFCH}$, wherein $P_{ID}$ is a physical layer source Identifier (ID) provided by Sidelink Control Information (SCI) corresponding to the first PSSCH; for beam feedback information, $M_{ID}=0$; and the PSFCH resource configuration information used for beam feedback includes at least one of: a PSFCH configuration period T, a frequency domain Physical Resource Block (PRB) set occupied by a PSFCH, and the number of cyclic shift pairs corresponding to the PSFCH.

In an exemplary embodiment, the information transmission method may further include: a UE determines $R_{PRB,CS}^{PSFCH}$ PSFCH resources corresponding to the first PSSCH, wherein the $R_{PRB,CS}^{PSFCH}$ PSFCH resources are sequentially numbered firstly according to physical resource block indexes and then according to cyclic shift pair indexes; and

the UE determines a PSFCH resource index used for beam feedback as $(P_{ID} + M_{ID}) \bmod R_{PRB, CS}^{PSFCH}$, wherein $P_{ID}$ is a physical layer source ID provided by SCI corresponding to the first PSSCH; for beam feedback information, $M_{ID}$ is equal to 0; or, in a case where the UE detects that a value of a transmission type indication field of a Channel State Information (CSI) format 2-A is 01, $M_{ID}$ is equal to a higher-layer indicated identifier of a UE which receives the first PSSCH, otherwise, $M_{ID}$ is equal to 0; and the UE uses a cyclic shift $m_{cs}$ of a sequence transmitted by a PSFCH to indicate whether the beam corresponding to the first PSCCH or PSSCH satisfies the requirement.

In an exemplary embodiment, the information transmission method may further include: a UE determines $R_{PRB,CS}^{PSFCH}$ PSFCH resources corresponding to the first PSSCH, wherein the $R_{PRB,CS}^{PSFCH}$ PSFCH resources are sequentially numbered firstly according to physical resource block indexes and then according to cyclic shift pair indexes; and the UE determines a PSFCH resource index used for beam feedback as $(P_{ID} + M_{ID}) \bmod R_{PRB,CS}^{PSFCH}$, wherein $P_{ID}$ is a physical layer source ID provided by SCI corresponding to the first PSSCH; for beam feedback information, $M_{ID}$ is equal to a fixed value X, and for Hybrid Automatic Repeat reQuest (HARQ) feedback information, $M_{ID}$ is equal to a fixed value Y

In an exemplary embodiment, the information transmission method may further include: a UE determines $R_{PRB,CS}^{PSFCH}$ PSFCH resource corresponding to the first PSSCH, wherein the $R_{PRB,CS}^{PSFCH}$ PSFCH resources are sequentially numbered firstly according to physical resource block indexes and then according to cyclic shift pair indexes; a higher-layer entity configures or pre-configures, for the UE, an offset $\Delta m_0$ of an initial cyclic shift of a PSFCH sequence used for beam feedback relative to an initial cyclic shift $m_0$ corresponding to HARQ feedback; and code division between the PSFCH used for beam feedback and the PSFCH used for HARQ feedback are achieved by different initial cyclic shifts.

In an exemplary embodiment, the information transmission method may further include: in a case where the beam corresponding to the first PSCCH or PSSCH satisfies the requirement, a cyclic shift of a sequence transmitted by a PSSCH is used to indicate that the beam corresponding to the first PSCCH or PSSCH satisfies the requirement; and in a case where the beam corresponding to the first PSCCH or PSSCH does not satisfy the requirement, no feedback is performed.

In an exemplary embodiment, the information transmission method may further include: in a case where the beam feedback information is carried on the PSFCH resource corresponding to the first PSSCH, the beam feedback information is indicated through a complex-valued symbol carried by a sequence, wherein the complex-valued symbol is formed by modulating 1-bit information indicating the beam feedback information, and the beam feedback information includes whether a beam corresponding to the first PSCCH or PSSCH satisfies a requirement.

In an exemplary embodiment, the information transmission method may further include: a UE determines, according to PSFCH resource configuration information used for beam feedback, $R_{PRB,CS}^{PSFCH}$ PSFCH resources corresponding to the first PSSCH, wherein the $R_{PRB,CS}^{PSFCH}$ PSFCH resources are sequentially numbered according to frequencies; and the UE determines a PSFCH resource index used for beam feedback as $(P_{ID} + M_{ID}) \bmod R_{PRB,CS}^{PSFCH}$, wherein $P_{ID}$ is a physical layer source ID provided by SCI corresponding to the first PSSCH; for beam feedback information, $M_{ID}=0$; and the PSFCH resource configuration information used for beam feedback includes at least one of: a PSFCH configuration period, a frequency domain position of each PSFCH resource, and a time domain symbol of the PSFCH resource.

In an exemplary embodiment, the information transmission method may further include: at least one of the following information is further indicated in the first PSCCH or PSSCH: whether HARQ feedback is enabled; and whether beam feedback is enabled.

In an exemplary embodiment, the information transmission method may further include: in a case where a measurement parameter value of a reference signal corresponding to the first PSCCH or PSSCH is greater than a threshold, a first cyclic shift and a second cyclic shift are used to respectively indicate an Acknowledgement (ACK) and a Non-Acknowledgement (NACK); and in a case where the measurement parameter value of the reference signal corresponding to the first PSCCH or PSSCH is smaller than or equal to the threshold, a third cyclic shift and a fourth cyclic shift are used to respectively indicate the ACK and the NACK.

In an exemplary embodiment, in a case where a measurement parameter value of a reference signal corresponding to the first PSCCH or PSSCH is greater than a threshold, a first cyclic shift and a second cyclic shift are used to respectively indicate an ACK and a NACK; and in a case where the measurement parameter value of the reference signal corresponding to the first PSCCH or PSSCH is smaller than or equal to the threshold, no feedback is performed.

In an exemplary embodiment, in a case where a measurement parameter value of a reference signal corresponding to the first PSCCH or PSSCH is greater than a threshold and PSSCH reception is correct, a cyclic shift is used to indicate an ACK; and in a case where the measurement parameter value of the reference signal corresponding to the first PSCCH or PSSCH is greater than or smaller than the threshold or the PSSCH reception is incorrect, no feedback is performed.

In an exemplary embodiment, in a case where an HARQ-ACK value is ACK, a UE uses a cyclic shift to indicate an ACK; in a case where the HARQ-ACK value is NACK and the beam satisfies the requirement, the UE uses another cyclic shift to indicate an NACK; and in a case where the HARQ-ACK value is NACK and the beam does not satisfy the requirement, the UE performs no feedback.

In an exemplary embodiment, the information transmission method may further include: in a case where the beam feedback information is carried on the PSFCH resource corresponding to the first PSSCH, HARQ feedback and the beam feedback information are indicated through a complex-valued symbol carried by a sequence, wherein the complex-valued symbol is formed by modulating 1-bit or 2-bit information indicating the HARQ feedback and the beam feedback information, and the beam feedback information includes whether a beam corresponding to the first PSCCH or PSSCH satisfies a requirement.

In an exemplary embodiment, the information transmission method may further include: in a case where a measurement parameter value of a reference signal corresponding to the first PSCCH or PSSCH is greater than a threshold, a first bit value and a second bit value are used to respectively indicate an ACK and a NACK; and in a case where the measurement parameter value of the reference signal corresponding to the first PSCCH or PSSCH is not greater than the threshold, a third bit value and a fourth bit value are used to respectively indicate the ACK and the NACK.

In an exemplary embodiment, in a case where a measurement parameter value of a reference signal corresponding to the first PSCCH or PSSCH is greater than a threshold, a first bit value and a second bit value are used to respectively indicate an ACK and a NACK; and in a case where the measurement parameter value of the reference signal corresponding to the first PSCCH or PSSCH is not greater than the threshold, no feedback is performed.

In an exemplary embodiment, in a case where a measurement parameter value of a reference signal corresponding to the first PSCCH or PSSCH is greater than a threshold and PSSCH reception is correct, a bit value is used to indicate an ACK; and in a case where the measurement parameter value of the reference signal corresponding to the first PSCCH or PSSCH is not greater than the threshold or the PSSCH reception is incorrect, no feedback is performed.

In an exemplary embodiment, the information transmission method may further include: in a case where the beam feedback information is carried on the sent second PSCCH or PSSCH, specifically, on the SCI-1 information, or the MAC CE, or the SCI-2 information on the sent second PSCCH or PSSCH, the beam feedback information includes not only beam information corresponding to the first PSCCH or PSSCH, but also includes beam information corresponding to a PSCCH or PSSCH before the first PSCCH or PSSCH, the information transmission method includes one of the following: the beam feedback information includes: whether a beam corresponding to the first PSCCH or PSSCH satisfies a requirement.

In an exemplary embodiment, the beam feedback information includes a measurement parameter value; or the beam feedback information includes at least one of: an index of a beam with strongest Reference Signal Received Power (RSRP), a strongest measurement parameter value, and a differential measurement parameter value using the strongest measurement parameter value as a reference; or the beam feedback information includes at least one of: an index of a beam, and a measurement parameter value; or the beam feedback information includes at least one of: an index of a beam, a measurement parameter value, a strongest measurement parameter value, a differential measurement parameter value using the strongest measurement parameter value as a reference, and the number of beams to be fed back; or the beam feedback information includes at least one of: an index of a beam, a measurement parameter value, a strongest measurement parameter value, a difference measurement parameter value using the strongest measurement parameter value as a reference, and the number of beams to be fed back.

In an exemplary embodiment, the information transmission method may further include: the beam feedback information is determined according to a configured or preconfigured beam reporting configuration, wherein the beam reporting configuration includes at least one of: a measurement parameter to be fed back, the number of beams to be fed back, whether group-based beam feedback is enabled, and a reference signal configuration.

In an exemplary embodiment, the information transmission method may further include: whether a PSFCH contains the beam feedback information or whether beam feedback is enabled is configured or indicated through a higher-layer signalling.

In an exemplary embodiment, the information transmission method may further include: in a case where a UE receives a PSSCH, and sidelink control information associated with the PSSCH, or the PSSCH, or a higher-layer signalling configuration indicates that beam feedback is enabled, the UE sends the beam feedback information on a resource corresponding to the PSSCH.

In an exemplary embodiment, the information transmission method may further include: in a case where it is configured through a higher-layer signalling that beam feedback is enabled, when a PSSCH is received, and sidelink control information associated with the PSSCH or the PSSCH indicates that beam feedback is enabled, a UE sends the beam feedback information on a resource corresponding to the PSSCH.

In an exemplary embodiment, the information transmission method may further include: in a case where the sidelink control information associated with the PSSCH indicates that HARQ feedback is required, the beam feedback information and HARQ feedback information are multiplexed and sent together on the resource corresponding to the PSSCH.

In an exemplary embodiment, the information transmission method may further include: the beam feedback information is sent in a delay window subsequent to transmission of the first PSCCH or PSSCH, wherein the delay window is obtained in one of the following manners:

the delay window is obtained based on configuration or pre-configuration; a first emerging PSFCH feedback resource at least M slots subsequent to the first PSCCH or PSSCH is determined based on a time domain position of the received first PSCCH or PSSCH; or the delay window provided by a UE receiving the beam feedback information is obtained.

It should be noted that the beam feedback information in the embodiments of the present disclosure includes: whether a beam corresponding to the first PSCCH or PSSCH satisfies a requirement; or

the beam feedback information includes a measurement parameter value; or

the beam feedback information includes at least one of: an index of a beam with strongest RSRP, a strongest measurement parameter value, and a differential measurement parameter value using the strongest measurement parameter value as a reference; or

the beam feedback information includes at least one of: an index of a beam and a measurement parameter value; or

the beam feedback information includes at least one of: an index of a beam, a measurement parameter value, a strongest measurement parameter value, a differential measurement parameter value using the strongest measurement parameter value as a reference, and the number of beams to be fed back; or

the beam feedback information includes at least one of: an index of a beam, a measurement parameter value, a strongest measurement parameter value, a difference measurement parameter value using the strongest measurement parameter value as a reference, and the number of beams to be fed back.

In an exemplary embodiment, the information transmission method may further include:

in a case where the UE receives a PSSCH and beam feedback is enabled, the UE indicates, in the delay window subsequent to the PSSCH, the beam feedback information through a MAC CE, a sidelink control channel, or a higher-layer signalling.

In an exemplary embodiment, the information transmission method may further include:

the first PSCCH or PSSCH indicates whether beam feedback is enabled through sidelink control information associated with the first PSSCH, or a MAC CE, or a higher-layer signalling.

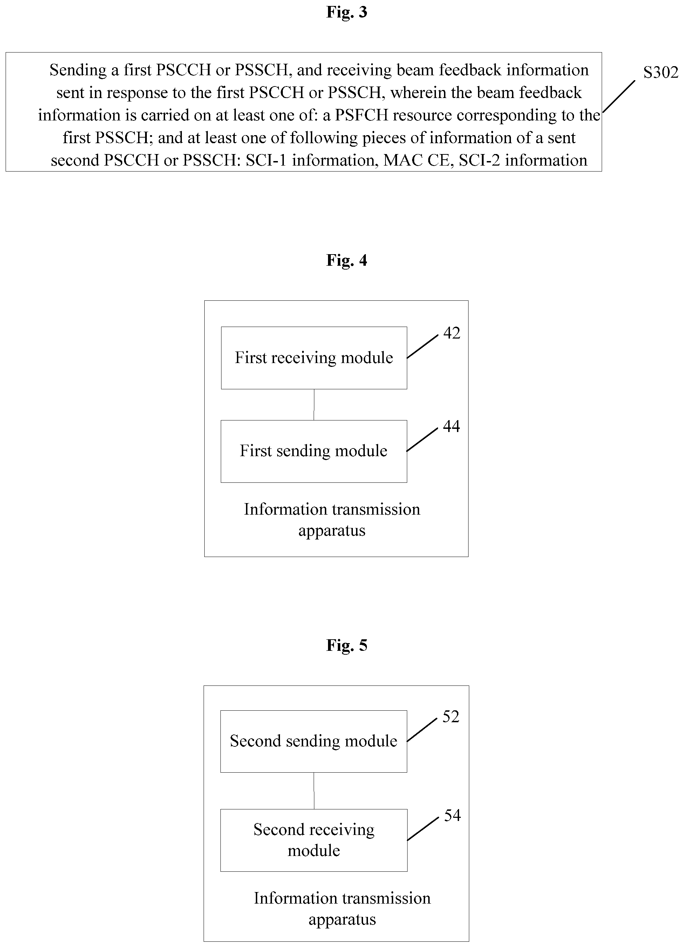

Another embodiment of the present disclosure further provides an information transmission method. Fig. 3 is another flowchart of an information transmission method according to an embodiment of the present disclosure. As shown in Fig. 3, the information transmission method includes the following operation S302.

At operation S302, a first PSCCH or PSSCH is sent, and beam feedback information sent in response to the first PSCCH or PSSCH is received, wherein the beam feedback information is carried on at least one of: a PSFCH resource corresponding to the first PSSCH; and at least one of following pieces of information of a sent second PSCCH or PSSCH: SCI-1 information, a MAC CE, and SCI-2 information.

By means of the technical solution provided in the embodiment of the present disclosure, a first PSCCH or PSSCH (also denoted as PSCCH/PSSCH) is sent, and beam feedback information sent in response to the first PSCCH or PSSCH is received, wherein the beam feedback information is carried on at least one of: a PSFCH resource corresponding to the first PSSCH; and at least one of following pieces of information of a sent second PSCCH or PSSCH: SCI-1 information, a MAC CE, and SCI-2 information. The embodiments of the present disclosure provide a beam feedback manner applied to the sidelink communication, and therefore, the problem in the related art that beam feedback cannot be performed in a sidelink communication can be solved.

In an exemplary embodiment, the information transmission method may further include: in a case where a User Equipment (UE) sends a PSSCH and indicates that beam feedback is enabled, the beam feedback information is received on a resource corresponding to the PSSCH, wherein the beam feedback information includes at least one of: whether a beam corresponding to the PSSCH satisfies a requirement, an index of the beam, a measurement parameter value, an index of a beam with strongest Reference Signal Received Power (RSRP), a strongest measurement parameter value, and a differential measurement parameter value using the strongest measurement parameter value as a reference, and the number of beams to be fed back.

In an exemplary embodiment, the information transmission method may further include: whether beam feedback is enabled is indicated through sidelink control information associated with the first PSSCH or through the first PSSCH or through a higher-layer signalling; or, in a case where it is configured through a higher-layer signaling that beam feedback is enabled, whether the beam feedback is enabled is further indicated through sidelink control information associated with the first PSSCH or through the first PSSCH.

In an exemplary embodiment, the information transmission method may further include: in a case where the beam feedback information is carried on the PSFCH resource corresponding to the first PSSCH, the beam feedback information is indicated through a cyclic shift of a sequence, wherein the beam feedback information includes whether a beam corresponding to the first PSCCH or PSSCH satisfies a requirement; or

in a case where the beam feedback information is carried on the PSFCH resource corresponding to the first PSSCH, the beam feedback information is indicated through a complex-valued symbol carried by a sequence, wherein the complex-valued symbol is formed by modulating 1-bit information indicating beam feedback information, and the beam feedback information includes whether a beam corresponding to the first PSCCH or PSSCH satisfies a requirement; or

in a case where the beam feedback information is carried on the PSFCH resource corresponding to the first PSSCH, HARQ feedback and the beam feedback information are indicated through a complex-valued symbol carried by a sequence, wherein the complex-valued symbol is formed by modulating 1-bit or 2-bit information indicating the HARQ feedback and the beam feedback information, and the beam feedback information includes whether a beam corresponding to the first PSCCH or PSSCH satisfies a requirement; or

in a case where the beam feedback information is carried on the SCI-1 information, or the MAC CE, or the SCI-2 information on the sent second PSCCH or PSSCH, the beam feedback information further includes beam information corresponding to a PSCCH or PSSCH before the first PSCCH or PSSCH in addition to beam information corresponding to the first PSCCH or PSSCH, wherein the information transmission method includes one of the following: the beam feedback information includes: whether a beam corresponding to the first PSCCH or PSSCH satisfies a requirement; or

the beam feedback information is sent in a delay window subsequent to transmission of the first PSCCH or PSSCH, wherein the delay window is obtained in one of the following manners: the delay window is obtained based on configuration or pre-configuration; a first emerging PSFCH feedback resource at least M slots subsequent to the first PSCCH or PSSCH is determined based on a time domain position of the received first PSCCH or PSSCH; or the delay window provided by a UE receiving the beam feedback information is obtained.

Through the description of the foregoing embodiments, those having ordinary skill in the art may clearly understand that the information transmission method according to the foregoing embodiments may be implemented by software in addition to a necessary universal hardware platform, and definitely may also be implemented by hardware, however, in many cases, the former is a preferred implementation. Based on such understanding, the essence of the technical solutions of the present disclosure or the part contributing to the related art may be embodied in the form of a software product. The computer software product may be stored in a storage medium (such as a Read-Only Memory (ROM)/Random Access Memory (RAM), a magnetic disk, and an optical disk), and includes several instructions for instructing a terminal device (which may be a mobile phone, a computer, a server, a network device, or the like) to execute the information transmission method of the respective embodiments of the present disclosure.

In order to facilitate the understanding of the information transmission method in the above embodiments, the above technical solution will be explained below in combination with multiple embodiments, but the embodiments of the present disclosure are not limited thereto.

Embodiment 1 (UE sending beam feedback information): in a case where a PSSCH is received, a PSFCH is sent on a PSFCH resource corresponding to the PSSCH to indicate whether a beam corresponding to the PSSCH satisfies a requirement (indicated by a cyclic shift of a sequence).

In an embodiment, whether the beam corresponding to the PSSCH satisfies the requirement refers to whether a value of a measurement parameter (referred to as a measurement parameter value) of a reference signal corresponding to the PSSCH or the PSCCH associated with the PSSCH is greater than a threshold. In a case where the measurement parameter value is greater than the threshold, the requirement is satisfied, and in a case where the measurement parameter value is not greater than the threshold, the requirement is not satisfied. Other methods for determining whether the beam satisfies the requirement may also be used, which are not limited in this embodiment.

In an embodiment, the reference signal includes at least one of: a Channel State Information-Reference Signal (CSI-RS), a DeModulation Reference Signal (DMRS) and a Phase Tracking Reference Signal (PTRS). The measurement parameter refers to a parameter reflecting the reception strength or reception quality of the reference signal, and includes at least one of: Reference Signal Received Power (RSRP), Reference Signal Received Quality (RSRQ) and Signal to Interference plus Noise Ratio (SINR).

In an embodiment, a UE determines, according to provided PSFCH resource configuration information used for beam feedback, $R_{PRB,CS}^{PSFCH}$ PSFCH resources corresponding to the PSSCH, wherein the $R_{PRB,CS}^{PSFCH}$ PSFCH resources are sequentially numbered (namely, to obtain the PSFCH resource indexes) firstly according to physical resource block indexes and then according to cyclic shift pair indexes. The UE determines a PSFCH resource index used for beam feedback as $(P_{ID} + M_{ID}) \bmod R^{PSFCH}_{PRB, CS}$, where $P_{ID}$ is a physical layer source ID (namely, source ID) provided by SCI corresponding to the PSSCH; for beam feedback information, $M_{ID}=0$; alternatively, in a case where the UE detects that a value of a transmission type indication field of a CSI format 2-A is 01, $M_{ID}$ is equal to a higher-layer indicated identifier of the UE which receives the first PSSCH, otherwise, $M_{ID}$ is equal to 0; and the UE uses a cyclic shift $m_{cs}$ of a sequence transmitted by the PSFCH to indicate whether the beam corresponding to the first PSCCH or PSSCH satisfies the requirement. The PSFCH resource configuration information used for beam feedback includes at least one of: a PSFCH configuration period T, a frequency domain Physical Resource Block (PRB) set occupied by a PSFCH, and the number of cyclic shift pairs corresponding to the PSFCH. Preferably, the UE does not expect that the PSFCH resources used for beam feedback collide with the PSFCH resources used for other purposes (e.g., HARQ feedback, providing collision information).

In an embodiment, the UE determines $R^{PSFCH}_{PRB,CS}$ PSFCH resources corresponding to the PSSCH, wherein the $R^{PSFCH}_{PRB,CS}$ PSFCH resources are sequentially numbered (namely, to obtain PSFCH resource indexes) firstly according to physical resource block indexes and then according to cyclic shift pair indexes. The UE determines a PSFCH resource index used for beam feedback as $(P_{ID} + M_{ID}) \bmod R^{PSFCH}_{PRB, CS}$, where $P_{ID}$ is a physical layer source ID (namely, source ID) provided by SCI corresponding to the PSSCH; for beam feedback information, $M_{ID}$ is equal to 0, alternatively, in a case where the UE detects that a value of a transmission type indication field of a CSI format 2-A is "01", $M_{ID}$ is equal to a higher-layer indicated identifier of a UE that receives the PSSCH, otherwise, $M_{ID}$ is equal to 0; and the UE uses a cyclic shift $m_{cs}$ of a sequence transmitted by the PSSCH to indicate whether the beam corresponding to the PSSCH satisfies the requirement.

In an embodiment, the UE determines $R^{PSFCH}_{PRB,CS}$ PSFCH resources corresponding to the PSSCH, wherein the $R^{PSFCH}_{PRB,CS}$ PSFCH resources are sequentially numbered (namely, to obtain PSFCH resource indexes) firstly according to physical resource block indexes and then according to cyclic shift pair indexes. The UE determines a PSFCH resource index used for beam feedback as $(P_{ID} + M_{ID}) \bmod R^{PSFCH}_{PRB, CS}$, where $P_{ID}$ is a physical layer source ID (i.e., source ID) provided by SCI corresponding to the PSSCH; and for beam feedback information, $M_{ID}$ is equal to a fixed value X, and for HARQ feedback information, $M_{ID}$ is equal to a fixed value Y, for example, X=1, and Y=0.

In an embodiment, the UE determines $R^{PSFCH}_{PRB,CS}$ PSFCH resources corresponding to the PSSCH, wherein the $R^{PSFCH}_{PRB,CS}$ PSFCH resources are sequentially numbered (namely, to obtain PSFCH resource indexes) firstly according to physical resource block indexes and then according to cyclic shift pair indexes. A higher-layer entity configures or pre-configures for the UE an offset $\Delta m_0$ of an initial cyclic shift of a PSFCH sequence used for beam feedback relative to an initial cyclic shift $m_0$ corresponding to HARQ feedback. That is, the initial cyclic shift of the PSFCH sequence used for beam feedback is $m_0 + \Delta m_0$. Code division between the PSFCH used for beam feedback and the PSFCH used for HARQ feedback are achieved by different initial cyclic shifts. The UE does not expect the initial cyclic shifts of the PSFCH sequences for HARQ feedback and for beam feedback to be the same. In the embodiment, $\Delta m_0$ is configured or preconfigured by a higher-layer entity to the UE, or a fixed value is used, for example, $\Delta m_0 = 1$.

In an embodiment, a cyclic shift $m_{cs}$ of the sequence transmitted by the PSSCH is used to indicate whether the beam corresponding to the PSSCH satisfies the requirement. For example, as shown in Table 1, different cyclic shifts $m_{cs}$ are used to respectively indicate that a beam corresponding to the PSSCH satisfies the requirement and that a beam corresponding to the PSSCH does not satisfy the requirement. For example, the cyclic shift $m_{cs}$ being 0 indicates that the beam corresponding to the PSSCH does not satisfy the requirement; and the cyclic shift $m_{cs}$ being 6 indicates that the beam corresponding to the PSSCH satisfies the requirement. For another example, the mapping between the cyclic shift $m_{cs}$ of the sequence transmitted by the PSFCH and the beam feedback information may also be shown in Table 2.

Table 1: Mapping between cyclic shift $m_{cs}$ of the sequence transmitted by the PSFCH and the beam feedback information

| Whether the beam satisfies the requirement | Not satisfying the requirement | Satisfying the requirement |
| --- | --- | --- |
| Sequence cyclic shift | 0 | 6 |

Table 2: Mapping between cyclic shift $m_{cs}$ of the sequence transmitted by the PSFCH and the beam feedback information

| Whether the beam satisfies the requirement | Not satisfying the requirement | Satisfying the requirement |
|---|---|---|
| Sequence cyclic shift | 2 | 8 |

In an embodiment, in a case where the beam corresponding to the PSSCH satisfies the requirement, a cyclic shift of the sequence transmitted by the PSSCH is used to indicate that the beam corresponding to the PSSCH satisfies the requirement, and in a case where the beam corresponding to the PSSCH does not satisfy the requirement, no feedback is performed. For example, as shown in Table 3, in a case where the beam corresponding to the PSSCH satisfies the requirement, the cyclic shift $m_{cs}$ is 6, and in a case where the beam corresponding to the PSSCH does not satisfy the requirement, no feedback is performed. For another example, the mapping between the cyclic shift $m_{cs}$ of the sequence transmitted by the PSFCH and the beam feedback information may also be shown in Table 4.

Table 3: Mapping between cyclic shift $m_{cs}$ of the sequence transmitted by the PSFCH and the beam feedback information

| Whether the beam satisfies the requirement | Not satisfying the requirement | Satisfying the requirement |
|---|---|---|
| Sequence cyclic shift | N/A | 6 |

Table 4: Mapping between cyclic shift $m_{cs}$ of the sequence transmitted by the PSFCH and the beam feedback information

| Whether the beam satisfies the requirement | Not satisfying the requirement | Satisfying the requirement |
|---|---|---|
| Sequence cyclic shift | N/A | 8 |

In an embodiment, the PSFCH resources used for beam feedback and the PSFCH resources used for other purposes (e.g., HARQ feedback, collision information feedback, etc.) are different resources. For example, different PSFCH resources are different in the frequency, code or time domains. For example, different PSFCH resources may be embodied in at least one of the following aspects: different physical resource blocks, different cyclic shifts of sequences, and different slots.

In an embodiment, a parameter for calculating the cyclic shift of the sequence may include at least one of: an initial cyclic shift $m_0$ and a cyclic shift $m_{cs}$ corresponding to the feedback information. Different cyclic shifts of the sequences may be embodied in that at least one of the parameters $m_0$ and $m_{cs}$ is different. Reference is made to the protocols TS38.211 and TS38.213 for detailed information regarding calculation of the cyclic shift $\alpha$ based on parameters $m_0$ and $m_{cs}$, which will not be repeated here.

In an embodiment, in a case where the UE receives a PSCCH/PSSCH and beam feedback is enabled, the UE transmits the PSFCH on the PSFCH resource corresponding to the PSCCH/PSSCH to indicate the beam feedback information.

In an embodiment, the UE provides whether the UE has the capability to send beam feedback information.

Embodiment 2 (UE transmitting beam feedback information): in a case where a PSSCH is received, the UE transmits a PSFCH on a PSFCH resource corresponding to the PSSCH to indicate whether a beam corresponding to the PSSCH satisfies a requirement (indicated by using 1 bit "requirement satisfied or not" information). A method for determining whether the beam corresponding to the PSSCH satisfies the requirement is the same as that in Embodiment 1, and is not further described herein.

In an embodiment, the UE determines, according to provided PSFCH resource configuration information used for beam feedback, $R_{PRB,CS}^{PSFCH}$ PSFCH resources corresponding to the PSSCH, wherein the $R_{PRB,CS}^{PSFCH}$ PSFCH resources are sequentially numbered (namely, to obtain PSFCH resource indexes) according to frequencies, and the UE determines a PSFCH resource index used for beam feedback as $(P_{ID} + M_{ID}) \bmod R_{PRB,CS}^{PSFCH}$, where $P_{ID}$ is a physical layer source ID (namely, source ID) provided by SCI corresponding to the PSSCH; and for beam feedback information, $M_{ID}$ is equal to 0. The PSFCH resource configuration information used for beam feedback includes at least one of: a PSFCH configuration period, a frequency domain position of each PSFCH resource, and a time domain symbol of the PSFCH resource. For example, the frequency domain position of the PSFCH resource includes a starting physical resource block index of the PSFCH resource and the number of occupied physical resource blocks, and the time domain symbol of each PSFCH resource is fixed to the second to last and third to last symbols of each slot in a resource pool.

In an embodiment, whether the beam corresponding to the PSSCH satisfies the requirement may be indicated by "requirement satisfied or not" information carried by the PSFCH. For example, the "requirement satisfied or not" information may contain 1 bit, the bit value being 1 indicates that the beam corresponding to the PSSCH satisfies the requirement, and the bit value being 0 indicates that the beam corresponding to the PSSCH does not satisfy the requirement.

In an embodiment, in a case where the beam corresponding to the PSSCH satisfies the requirements, the bit value of the "requirement satisfied or not" information carried by the PSFCH indicates that the beam corresponding to the PSSCH satisfies the requirement, and in a case where the beam corresponding to the PSSCH does not satisfy the requirement, no feedback is performed. For example, the "requirement satisfied or not" information contains 1 bit, the bit value is 1 when the beam corresponding to the PSSCH satisfies the requirement, and no feedback is performed when the beam corresponding to the PSSCH does not satisfy the requirement.

In an embodiment, in a case where the UE receives the PSSCH and beam feedback is enabled, the UE sends the PSFCH on the PSFCH resource corresponding to the PSSCH to indicate the beam feedback information.

In an embodiment, the UE provides whether the UE has the capability to send the beam feedback information.

Embodiment 3 (UE sending beam feedback information): in a case where a PSSCH is received and HARQ feedback is enabled, the UE sends a PSFCH on a PSFCH resource corresponding to the PSSCH to indicate whether the HARQ feedback and/or whether a beam corresponding to the PSSCH satisfy a requirement (indicated by cyclic shift).

In an embodiment, in a case where the UE receives a PSSCH and sidelink control information associated with the PSSCH indicates that HARQ feedback is needed (namely, the value of the HARQ feedback enable/disable indication field is 1), the UE sends the PSFCH on the PSFCH resource corresponding to the PSSCH to indicate the HARQ feedback and/or whether the beam corresponding to the PSSCH satisfies the requirement.

In an embodiment, a cyclic shift of a sequence transmitted by the PSFCH is used to indicate the HARQ feedback and/or whether the beam corresponding to the PSSCH satisfies the requirement. In a case where a measurement parameter value of a reference signal corresponding to the PSSCH is greater than a threshold, a first cyclic shift and a second cyclic shift are used to respectively indicate an ACK and a NACK; and in a case where the measurement parameter value of the reference signal corresponding to the PSSCH is not greater than the threshold, a third cyclic shift and a fourth cyclic shift are used to respectively indicate the ACK and the NACK. For example, as shown in Table 5, in a case where the measurement parameter value of the reference signal corresponding to the PSSCH is greater than the threshold, the cyclic shift being 0 indicates the NACK, and the cyclic shift being 6 indicates the ACK; in a case where the measurement parameter value of the reference signal corresponding to the PSSCH is not greater than the threshold, the cyclic shift being 1 indicates the NACK, and the cyclic shift being 7 indicates the ACK; or in a case where the measurement parameter value of the reference signal corresponding to the PSSCH is not greater than the threshold, the cyclic shift being 2 indicates the NACK, and the cyclic shift being 8 indicates the ACK.

Table 5: Mapping between cyclic shift of the sequence transmitted by the PSFCH and the HARQ feedback information and the beam feedback information

| Whether the beam satisfies the requirement | Satisfying the requirement | | Not satisfying the requirement | |
|---|---|---|---|---|
| HARQ-ACK value | 0 (NACK) | 1 (ACK) | 0 (NACK) | 1 (ACK) |
| Sequence cyclic shift | 0 | 6 | 1(2) | 7(8) |

In an embodiment, the cyclic shift of the sequence transmitted by the PSFCH is used to indicate the HARQ feedback and/or whether the beam corresponding to the PSSCH satisfies the requirement. In a case where a measurement parameter value of a reference signal corresponding to the PSSCH is greater than a threshold, a first cyclic shift and a second cyclic shift are used to respectively indicate an ACK and a NACK; and in a case where the measurement parameter value of the reference signal corresponding to the PSSCH is not greater than the threshold, no feedback is performed. For example, as shown in Table 6, in a case where the measurement parameter value of the reference signal corresponding to the PSSCH is greater than the threshold, the cyclic shift being 0 indicates the NACK, and the cyclic shift being 6 indicates the ACK; in a case where the measurement parameter value of the reference signal corresponding to the PSSCH is not greater than the threshold, no feedback is performed (namely, the corresponding cyclic shift is not applicable (N/A, Not applicable)).

Table 6: Mapping between cyclic shift of the sequence transmitted by the PSFCH and the HARQ feedback information and the beam feedback information

| Whether the beam satisfies the requirement | Satisfying the requirement | | Not satisfying the requirement | |
|---|---|---|---|---|
| HARQ-ACK value | 0 (NACK) | 1 (ACK) | 0 (NACK) | 1 (ACK) |

(continued)

| Whether the beam satisfies the requirement | Satisfying the requirement | | Not satisfying the requirement | |
|---|---|---|---|---|
| Sequence cyclic shift | 0 | 6 | N/A | N/A |

In an embodiment, the cyclic shift of the sequence transmitted by the PSFCH is used to indicate the HARQ feedback and/or whether the beam corresponding to the PSSCH satisfies the requirement. In a case where a measurement parameter value of a reference signal corresponding to the PSSCH is greater than a threshold and PSSCH reception is correct, a cyclic shift is used to indicate the ACK; and in a case where the measurement parameter value of the reference signal corresponding to the PSSCH is not greater than the threshold or PSSCH reception is incorrect, no feedback is performed. For example, as shown in Table 7, in a case where the measurement parameter value of the reference signal corresponding to the PSSCH is greater than the threshold and PSSCH reception is correct, the cyclic shift being 6 indicates the ACK; and in a case where the measurement parameter value of the reference signal corresponding to the PSSCH is not greater than the threshold or PSSCH reception is incorrect, no feedback is performed.

Table 7: Mapping between cyclic shift of the sequence transmitted by the PSFCH and the HARQ feedback information and the beam feedback information

| Whether the beam satisfies the requirement | Satisfying the requirement | | Not satisfying the requirement | |
|---|---|---|---|---|
| HARQ-ACK value | 0 (NACK) | 1 (ACK) | 0 (NACK) | 1 (ACK) |
| Sequence cyclic shift | N/A | 6 | N/A | N/A |

In an embodiment, in a case where the HARQ-ACK value is the ACK, the UE uses a cyclic shift to indicate the ACK, that is, the UE feeds back the ACK regardless of whether the beam satisfies the requirement; in a case where the HARQ-ACK value is the NACK and the beam satisfies the requirement, the UE uses another cyclic shift to indicate the NACK; in a case where the HARQ-ACK value is the NACK and the beam does not satisfy the requirement, the UE does not perform feedback. For example, as shown in Table 8, in a case where the HARQ-ACK value is the ACK (namely, PSSCH reception is correct), the UE uses a cyclic shift of 6 to indicate the ACK, i.e., when PSSCH reception is correct, it is generally considered that the beam satisfies the requirement; in a case where the HARQ-ACK value is the NACK (namely, PSSCH reception is incorrect), and the beam satisfies the requirement, the UE uses a cyclic shift of 0 to indicate the NACK; and in a case where the HARQ-ACK value is the NACK and the beam does not satisfy the requirement, the UE does not perform feedback. For the UE receiving the feedback information, in a case where the UE does not receive the feedback, it can be considered that the beam does not satisfy the requirement.

Table 8: Mapping between cyclic shift of the sequence transmitted by the PSFCH and the HARQ feedback information and the beam feedback information

| HARQ-ACK value | 1 (ACK) | 0 (NACK) | |
|---|---|---|---|
| Whether the beam satisfies the requirement | N/A | Satisfying the requirement | Not satisfying the requirement |
| Sequence cyclic shift | 6 | 0 | N/A |

In a case where it is indicated in the SCI format associated with the PSSCH that the HARQ feedback is disabled, whether the beam corresponding to the PSSCH satisfies the requirement may be fed back according to the method provided in Embodiment 1 or Embodiment 2.

That is to say, when HARQ feedback is disabled, the beam feedback method is the same as that when independent beam feedback resources are adopted.

In an embodiment, in a case where the UE receives a PSSCH and beam feedback is enabled, the UE sends a PSFCH on a PSFCH resource corresponding to the PSSCH to indicate the beam feedback information.

In an embodiment, the UE provides whether the UE has the capability to send the beam feedback information.

Embodiment 4 (UE sending beam feedback information): in a case where a PSSCH is received and HARQ feedback is enabled, the UE sends a PSFCH on a PSFCH resource corresponding to the PSSCH to indicate the HARQ feedback and/or whether a beam corresponding to the PSSCH satisfies a requirement (indicated by using 1 bit or 2 bit "requirement satisfied or not" information).

In an embodiment, in a case where the UE receives a PSSCH and sidelink control information associated with the PSSCH indicates that HARQ feedback is needed (namely, the value of a HARQ feedback enable/disable indication field is 1), the UE sends the PSFCH on the PSFCH resource corresponding to the PSSCH to indicate the HARQ feedback and/or whether the beam corresponding to the PSSCH satisfies the requirement.

In an embodiment, the "requirement satisfied or not" information carried by the PSFCH is used to indicate the HARQ feedback and/or whether the beam corresponding to the PSSCH satisfies the requirement. The "requirement satisfied or not" information contains 2 bits. In a case where a measurement parameter value of a reference signal corresponding to the PSSCH is greater than a threshold, a first bit value and a second bit value are used to respectively indicate an ACK and a NACK; and in a case where the measurement parameter value of the reference signal corresponding to the PSSCH is not greater than the threshold, a third bit value and a fourth bit value are used to respectively indicate the ACK and the NACK. For example, in a case where the measurement parameter value of the reference signal corresponding to the PSSCH is greater than the threshold, the bit value being 00 indicates the NACK, and the bit value being 01 indicates the ACK; and in a case where the measurement parameter value of the reference signal corresponding to the PSSCH is not greater than the threshold, the bit value being 10 indicates the NACK, and the bit value being 11 indicates the ACK.

In an embodiment, the "requirement satisfied or not" information carried by the PSFCH is used to indicate the HARQ feedback and/or whether the beam corresponding to the PSSCH satisfies the requirement. The "requirement satisfied or not" information contains one bit. In a case where a measurement parameter value of a reference signal corresponding to the PSSCH is greater than a threshold, a first bit value and a second bit value are used to respectively indicate an ACK and a NACK; and in a case where the measurement parameter value of the reference signal corresponding to the PSSCH is not greater than the threshold, no feedback is performed. For example, in a case where the measurement parameter value of the reference signal corresponding to the PSSCH is greater than the threshold, the bit value being 0 indicates the NACK, and the bit value being 1 indicates the ACK; and in a case where the measurement parameter value of the reference signal corresponding to the PSSCH is not greater than the threshold, no feedback is performed.

In an embodiment, the "requirement satisfied or not" information carried by the PSFCH is used to indicate the HARQ feedback and/or whether the beam corresponding to the PSSCH satisfies the requirement. The "requirement satisfied or not" information contains one bit. In a case where a measurement parameter value of a reference signal corresponding to the PSSCH is greater than a threshold and PSSCH reception is correct, a bit value is used to indicate the ACK; and in a case where the measurement parameter value of the reference signal corresponding to the PSSCH is not greater than the threshold or PSSCH reception is incorrect, no feedback is fed back. For example, in a case where the measurement parameter value of the reference signal corresponding to the PSSCH is greater than the threshold and PSSCH reception is correct, the bit value being 1 indicates the ACK; and in a case where the measurement parameter value of the reference signal corresponding to the PSSCH is not greater than the threshold or PSSCH reception is incorrect, no feedback is performed.

In an embodiment, in a case where the UE receives a PSSCH and beam feedback is enabled, the UE sends a PSFCH on a PSFCH resource corresponding to the PSSCH to indicate the beam feedback information.

In an embodiment, the UE provides whether the UE has the capability to send the beam feedback information.

In an embodiment, a method for determining the PSFCH resource corresponding to the PSSCH may be the same as that in Embodiment 1, and other methods may also be used, which are not limited in this embodiment.

In an embodiment, a method for determining the PSFCH resource used for beam feedback may be the same as that in Embodiment 2, and other methods may also be used, which are not limited in this embodiment.

Embodiment 5 (UE sending beam feedback information): in a case where a PSSCH is received, the UE sends a PSFCH on a PSFCH resource corresponding to the PSSCH to indicate the beam feedback information.

In an embodiment, in a case where the UE receives the PSSCH, the UE sends the PSFCH on the PSFCH resource corresponding to the PSSCH to indicate the beam feedback information.

In an embodiment, the beam feedback information includes: whether a beam corresponding to the PSSCH satisfies a requirement.

In an embodiment, the beam feedback information includes a measurement parameter value. For example, there are one or more sending beams in a slot where the PSSCH is located, and the beam feedback information contains an RSRP value of each beam.

In an embodiment, the beam feedback information includes: an index of a beam with the strongest RSRP, a strongest measurement parameter value, and a differential measurement parameter value using the strongest measurement parameter value as a reference. For example, in a slot where the PSSCH is located, or in a slot where the PSSCH is located and one or more preceding slots, there are one or more sending beams, and the beam feedback information includes a strongest RSRP value, an index of a beam with the strongest RSRP, and a difference value of an RSRP value corresponding to other beams with respect to the strongest RSRP value.

In an embodiment, the beam feedback information includes: an index of a beam, and a measurement parameter value. For example, there may be multiple sending beams in a slot where the PSSCH is located, or in a slot where the PSSCH is located and one or more preceding slots, the beam feedback information includes an index of a beam with the strongest RSRP and an RSRP value corresponding to the beam. For example, there may be N sending beams in a slot where the PSSCH is located, or in a slot where the PSSCH is located and one or more preceding slots, and the beam feedback information includes indexes of M beams with the highest RSRP values and RSRP values corresponding to the beams, wherein M is smaller than or equal to N.

In an embodiment, the beam feedback information includes at least one of: an index of a beam, a measurement parameter value, a strongest measurement parameter value, a difference measurement parameter value using the strongest measurement parameter value as a reference, and the number of beams to be fed back. When the number of beams to be fed back is 1, the beam feedback information includes: an index of a beam, and a measurement parameter value. When the number of beams to be fed back is greater than 1, the beam feedback information includes: an index of a beam, a strongest measurement parameter value, and a differential measurement parameter value using the strongest measurement parameter value as a reference. The number of beams to be fed back may be configured by higher-layer signalling, or the feedback UE determines the number of beams to be fed back. In a case where the number of beams to be fed back is determined by the feedback UE, the beam feedback information further includes the number of beams to be fed back.

For example, it is configured by the higher-layer signalling that the number of beams to be fed back is 1, and there are three sending beams: beam 0, beam 1 and beam 2 in the slot where the PSSCH is located, or in the slot where the PSSCH is located and one or more preceding slots. The reference signal sent in the direction of the beam 1 has the maximum RSRP value, then the beam feedback information includes: an index of the beam 1, and the RSRP value corresponding to the beam 1.

For example, there are three sending beams: beam 0, beam 1 and beam 2 in the slot where the PSSCH is located, or in the slot where the PSSCH is located and in one or more preceding slots. The reference signal sent in the direction of the beam 1 has the maximum RSRP value, the UE determines to feed back one beam, then the beam feedback information includes: the number of beams to be fed back being 1, an index of the beam 1, and an RSRP value corresponding to the beam 1.

For example, it is configured by the higher-layer signalling that the number of beams to be fed back is 2, and there are three sending beams: beam 0, beam 1 and beam 2 in the slot where the PSSCH is located, or in the slot where the PSSCH is located and one or more preceding slots. The reference signal sent in the direction of the beam 1 has the maximum RSRP value, the reference signal sent in the direction of the beam 0 has the second maximum RSRP value, and the UE determines to feed back two beams, then the beam feedback information includes: an index of the beam 1, an RSRP value corresponding to the beam 1, an index of the beam 0, and a difference between the RSRP value corresponding to the beam 0 and the RSRP value corresponding to the beam 1.

In the above example, the measurement parameter RSRP may also be replaced with another parameter, for example, replaced with an SINR, and the specific options for the measurement parameter are not listed one by one herein.

In an embodiment, the beam feedback information includes at least one of: an index of a beam, a measurement parameter value, a strongest measurement parameter value, a difference measurement parameter value using the strongest measurement parameter value as a reference, and the number of beams to be fed back. When the number of beams to be fed back is 1, the beam feedback information includes: an index of a beam and a measurement parameter value corresponding to the beam. When the number of beams to be fed back is greater than 1 or group-based beam feedback is enabled, the beam feedback information includes: an index of a beam, a strongest measurement parameter value, and a difference measurement parameter value using the strongest measurement parameter value as a reference. When group-based beam feedback is enabled, the UE feeds back two different beams in one feedback instance, and the UE may receive the two beams at the same time. The number of beams to be fed back may be configured by higher-layer signalling, or the feedback UE determines the number of beams to be fed back. In a case where the number of beams to be fed back is determined by the feedback UE, the beam feedback information further includes the number of beams to be fed back.

In an embodiment, the beam feedback information is determined according to a configured or preconfigured beam reporting configuration. The beam reporting configuration includes at least one of: a measurement parameter to be fed back, the number of beams to be fed back, whether group-based beam feedback is enabled, and a reference signal configuration.

In an embodiment, the index of the beam may be indicated by at least one of: a reference signal index, a slot index, an intra-slot reference signal index, and an intra-slot beam index.

In an embodiment, the index of the beam is indicated by a reference signal index. For example, the reference signal index is an identifier of a reference signal configured by higher-layer signalling.

In an embodiment, the index of the beam is indicated by a slot index, and the slot index is represented by the number of offset slots relative to the slot enabling the beam feedback or the slot sending the beam feedback information. The number of offset slots is the number of logical slots or the number of physical slots. For example, taking the physical slot as an example, a slot index of 0 indicates a slot in which beam feedback is enabled, a slot index of 1 indicates a slot preceding the slot in which beam feedback is enabled, and so on. For another example, taking the logical slot as an example, a slot index 0 represents a slot, that enabling beam feedback, in a resource pool, and a slot index 1 represents a slot preceding the slot, that enables beam feedback, in the resource pool, that is to say, when the number of offset slots is indicated by the logical slot index, only slots in the resource pool are counted; while when the number of offset slots is indicated by the physical slot index, all slots in an SFN/DFN period are counted. For a manner of indicating a slot index by using the number of offset slots relative to the slot for sending the beam feedback information, an example thereof is similar to that of the manner of indicating a slot index by using the number of offset slot relative to a slot for enabling beam feedback, with "the slot for enabling beam feedback" being replaced with "the slot for sending beam feedback information". Generally, in a Synchronization Logic (SL) system, the logical slot refers to a slot in a resource pool, and the physical slot refers to a slot within a System Frame Number (SFN) or a Direct Frame Number (DFN) period.

In an embodiment, the index of the beam is indicated by a slot index and an intra-slot reference signal index, and the slot index is represented by the number of offset slots relative to the slot enabling the beam feedback or the slot sending the beam feedback information. The intra-slot reference signal index is a number of a reference signal in a slot. The number of offset slots is the number of logical slots or the number of physical slots. For example, taking the physical slot as an example, a slot index of 0 indicates a slot in which beam feedback is enabled, a slot index of 1 indicates a slot preceding the slot in which beam feedback is enabled, and so on. There are three reference signals in the slot, which are numbered 0, 1 and 2 in time sequence. The beam represented by the slot index K and the intra-slot reference signal index L is the (L+1)th reference signal in the slot of K slots offset relative to the slot where beam feedback is enabled in the resource pool. For a manner of indicating a slot index by using the number of offset slots relative to the slot for sending the beam feedback information, an example thereof is similar to that of the manner of indicating a slot index by using the number of offset slots relative to the slot for enabling beam feedback, with "the slot for enabling beam feedback" being replaced with "the slot for sending beam feedback information".

In an embodiment, the beam index is indicated by a slot index and an intra-slot beam index, and the slot index is represented by the number of offset slots relative to the slot enabling the beam feedback or the slot sending the beam feedback information. The intra-slot beam index is a number of a beam in a slot. The number of offset slots is the number of logical slots or the number of physical slots. For example, taking the physical slot as an example, a slot index of 0 indicates a slot in which beam feedback is enabled, a slot index of 1 indicates a slot preceding the slot in which beam feedback is enabled, and so on. There are three beams in a slot, which are numbered as 0, 1 and 2 in time sequence. The beam represented by the slot index K and the intra-slot beam index L is the (L+1)th beam in the slots of K slots offset relative to the slots in which beam feedback is enabled in the resource pool. For a manner of indicating a slot index by using the number of offset slots relative to the slot for sending the beam feedback information, an example thereof is similar to that of the manner of indicating a slot index by using the number of offset slots relative to the slot for enabling beam feedback, with "the slot for enabling beam feedback" being replaced with "the slot for sending beam feedback information".

In an embodiment, the slot for enabling beam feedback refers to a slot for transmitting indication information indicating whether beam feedback is enabled.

In an embodiment, the UE is configured through higher-layer signalling concerning whether the PSFCH contains beam feedback information or whether beam feedback is enabled.

In an embodiment, in a case where the UE receives a PSSCH and it is indicated, through sidelink control information associated with the PSSCH, or the PSSCH, or the higher-layer signalling configuration, that beam feedback is enabled, the UE sends a PSFCH on a PSFCH resource corresponding to the PSSCH to indicate the beam feedback information. For example, when indicating by the PSSCH that the beam feedback is enabled, the enabling of beam feedback may be indicated by a MAC CE carried on the PSSCH, or by higher-layer signalling sent over the PSSCH.

In an embodiment, whether beam feedback is enabled is configured through higher-layer signalling. For example, in a case where the configuration period of the PSFCH resources used for beam feedback is 0, it indicates that beam feedback is not enabled; otherwise, it indicates that beam feedback is enabled.

In an embodiment, in a case where it is configured by higher-layer signalling that the beam feedback is enabled, the enabling of beam feedback may be indicated by sidelink control information associated with the PSSCH or by the PSSCH. That is, even if resources used for beam feedback are configured by the higher-layer signalling, it is possible to further indicate whether beam feedback is enabled for a specific PSSCH.

In an embodiment, whether beam feedback is enabled is indicated through the PSSCH, and whether beam feedback is enabled may be indicated through a MAC CE carried on the PSSCH.

In an embodiment, in a case where beam feedback is not enabled or no beam feedback enabled parameter is configured by the higher-layer signalling, it is not necessary to indicate whether the PSFCH includes the beam feedback information or whether beam feedback is enabled.

In an embodiment, in a case where it is configured by the higher-layer signalling that the beam feedback is enabled, when a PSSCH is received and sidelink control information associated with the PSSCH or the PSSCH indicates that the beam feedback is enabled, the UE sends a PSFCH on a PSFCH resource corresponding to the PSSCH to indicate the beam feedback information.

In an embodiment, in a case where the sidelink control information associated with the PSSCH indicates that HARQ feedback is needed, the PSFCH further indicates HARQ feedback information.

In an embodiment, the PSFCH resources used for beam feedback and the PSFCH resources used for other purposes (e.g., HARQ feedback, collision information feedback, etc.) are different resources. For example, different PSFCH resources may be different in the frequency, code or time domains, and specifically, different PSFCH resources may be embodied in at least one of the following aspects: different physical resource blocks, different cyclic shifts of sequences, and different slots. That the cyclic shifts of the sequences are different means that at least one of the parameters $m_0$ and $m_{cs}$ is different.

In an embodiment, in a case where the UE receives a PSSCH and beam feedback is enabled, the UE sends a PSFCH on a PSFCH resource corresponding to the PSSCH to indicate the beam feedback information.

In an embodiment, the UE provides whether the UE has the capability to send the beam feedback information.

In an embodiment, a method for determining a PSFCH resource used for beam feedback may be the same as that in Embodiment 2, and other methods may also be used, which are not limited in this embodiment.

Embodiment 6 (UE sending beam feedback information): indicating beam feedback information using a MAC CE or sidelink control channel within a delay window after PSSCH transmission

In an embodiment, in a case where the UE receives a PSSCH, the UE indicates the beam feedback information through a MAC CE or sidelink control information within a delay window following the PSSCH.

In an embodiment, the beam reporting configuration further includes a delay window configuration. For example, the beam reporting configuration also contains a boundary position of the delay window from the start of the slot where beam feedback is enabled, and the boundary position may be indicated in units of slots.

In an embodiment, in a case where the UE receives a PSSCH and beam feedback is enabled, the UE indicates the beam feedback information through a MAC CE or a sidelink control channel within a delay window following the PSSCH.

In an embodiment, the sidelink control information associated with the PSSCH indicates whether or not beam feedback is to be performed.

In an embodiment, the PSSCH indicates whether or not to perform beam feedback. For example, the MAC CE signalling carried by the PSSCH indicates whether or not to perform beam feedback.

In an embodiment, whether to perform beam feedback is configured through higher-layer signalling.

In an embodiment, for the same UE, another beam feedback is not allowed to be triggered until the ongoing beam feedback is complete or until the ending of the last slot of the delay window.

In an embodiment, in a case where the UE receives a PSSCH and beam feedback is enabled, the UE sends a PSFCH on a PSFCH resource corresponding to the PSSCH to indicate the beam feedback information.

In an embodiment, the UE provides whether the UE has the capability to send the beam feedback information.

For undetailed information (such as beam feedback information and beam reporting configuration) in this embodiment, reference may be made to Embodiment 5, the main difference between this embodiment and Embodiment 5 is that resources for sending the beam feedback information may be different, or time sequence relationships of the resources for sending the beam feedback information may be different. The contents which are not detailed are the same as those in Embodiment 5.

Embodiment 7 (UE receiving beam feedback information): in a case where a PSSCH is sent and it is indicated to enable beam feedback, a PSFCH is received on a PSFCH resource corresponding to the PSSCH, wherein the PSSCH indicates whether a beam corresponding to the PSSCH satisfies a requirement

In an embodiment, the UE sends a PSSCH and instructs to enable beam feedback, and then receives a PSFCH on a PSFCH resource corresponding to the PSSCH, wherein the PSFCH indicates the beam feedback information. The beam feedback information includes at least one of: whether a beam corresponding to the PSSCH satisfies a requirement, an index of the beam, a measurement parameter value, an index of a beam with the strongest RSRP, a strongest measurement parameter value, a differential measurement parameter value using the strongest measurement parameter value as a reference, and the number of beams to be fed back.

In an embodiment, sidelink control information associated with the PSSCH indicates whether or not beam feedback is enabled. For example, a first-stage SCI (abbreviated as SCI-1) associated with the PSSCH indicates whether or not beam feedback is enabled, or a second-stage SCI (abbreviated as SCI-2) associated with the PSSCH indicates whether or not beam feedback is enabled. Typically, SCI-1 is carried on the PSCCH and SCI-2 is carried on the PSSCH.

In an embodiment, the PSSCH indicates whether the beam feedback is enabled. For example, the MAC CE signaling carried by the PSSCH indicates whether the beam feedback is enabled.

In an embodiment, the UE determines whether to enable beam feedback according to whether a receiving end has a capability of sending the beam feedback information.

In an embodiment, in a case where the UE receives a PSSCH and beam feedback is enabled, the UE sends a PSFCH on a PSFCH resource corresponding to the PSSCH to indicate the beam feedback information.

In an embodiment, the UE provides whether the UE has the capability to send the beam feedback information.

In an embodiment, for one PSFCH receiving opportunity, the UE selects a sending beam according to the received PSFCH.

In an embodiment, for one PSFCH receiving opportunity, the UE performs one of the following operations:

in a case where a received PSFCH indicates that the beam satisfies the requirement, the UE reports that the beam satisfies the requirement to a higher-layer, and in a case where the received PSFCH indicates that the beam does not satisfy the requirement, the UE reports that the beam does not satisfy the requirement to the higher-layer;

in a case where the received PSFCH indicates that the beam satisfies the requirement, the UE reports that the beam satisfies the requirement to a higher-layer, and in a case where a PSFCH indicating whether the beam satisfies the requirement is not received, the UE reports that the beam does not satisfy the requirement to the higher-layer;

in a case where a PSFCH containing HARQ feedback information is received and HARQ-ACK information is an ACK, the UE reports that the beam satisfies the requirement to a higher-layer; and in a case where the PSFCH containing the HARQ feedback information is not received, or the HARQ-ACK information is a NACK, the UE reports that the beam satisfies the requirement to the higher-layer;

the beam feedback information reported to the higher-layer is the same as the beam feedback information contained in the received PSFCH; or

the UE determines at least one available beam according to the received PSFCH, and reports the at least one available beam to the higher-layer.

Embodiment 8 (higher-layer entity): a receiving end of feedback information

In an embodiment, the higher-layer entity configures or pre-configures at least one of the following information to UE:
a PSFCH resource used for beam feedback, including at least one of the following information: a PSFCH configuration period T, a frequency domain PRB set occupied by the PSFCH, the number of cyclic shift pairs corresponding to the PSFCH, an offset $\Delta m_0$ of an initial cyclic shift $m_0$ of a PSFCH sequence relative to an initial cyclic shift corresponding to HARQ feedback, and an offset $\Delta m_{cs}$ of the cyclic shift $m_{cs}$ of the PSFCH sequence relative to the cyclic shift corresponding to the HARQ feedback.

The UE determines whether the beam satisfies the threshold of the required measurement parameter.

In an embodiment, in a case where the configuration period of the PSFCH resources used for beam feedback is 0, the UE is disabled from sending the PSFCH.

In an embodiment, a slot k containing a PSFCH sending opportunity satisfies $(k-\Delta T) \bmod T = 0$, where k is a slot index (namely, a logical slot index) in a resource pool or a slot index (namely, a physical slot index) in an SFN/DFN period, $\Delta T$ takes a logical slot or a physical slot as a unit, and $\Delta T$ is configured or pre-configured by a higher-layer entity, or is 0 by default.

In an embodiment, the higher-layer entity configures or pre-configures configuration information of PSFCH resources used for beam feedback to a UE, wherein the configuration information includes at least one of: a starting physical resource block index of a PSFCH resource, the number of physical resource blocks occupied by each PSFCH resource, and a time domain symbol of each PSFCH resource.

In an embodiment, a sending beam is selected according to beam information reported by the UE. The beam information includes at least one of: the beam satisfies a requirement, the beam does not satisfy the requirement, and beam feedback information.

In an embodiment, the higher-layer entity includes a base station, a network, a higher-layer of the UE, or other higher-layer entities.

In an embodiment, in a case where the UE receives a PSSCH and beam feedback is enabled, the UE sends a PSFCH on a PSFCH resource corresponding to the PSSCH to indicate the beam feedback information.

In an embodiment, the higher-layer entity receives capability information provided by the UE, e.g., whether the UE has the capability to send the beam feedback information.

Embodiment 9: prioritization of PSFCH

The priority of the sending of the PSSFCH used for beam feedback is at least one of: the priority of the sending of the PSSFCH used for beam feedback is the same as the priority of the PSSCH corresponding to the fed back beam; the priority of the sending of the PSSFCH used for beam feedback is the same as the priority indicated in sidelink control information for enabling beam feedback, the priority of the sending of the PSSFCH used for beam feedback is the same as a minimum priority value in the priorities of the PSSCH corresponding to the fed back beam; or the priority of the sending of the PSSFCH used for beam feedback is the same as a maximum priority value in the priorities of the PSSCH corresponding to the fed back beam.

The priority of the receiving of the PSSFCH used for beam feedback is at least one of: the priority of the receiving of the PSSFCH used for beam feedback is the same as the priority of the PSSCH corresponding to the fed back beam; the priority of the receiving of the PSSFCH used for beam feedback is the same as the priority indicated in sidelink control information for enabling beam feedback, the priority of the receiving of the PSSFCH used for beam feedback is the same as a minimum priority value in the priorities of the PSSCH corresponding to the fed back beam; or the priority of the receiving of the PSSFCH used for beam feedback is the same as a maximum priority value in the priorities of the PSSCH corresponding to the fed back beam.

If Ntx PSFCHs are to be sent in one PSFCH sending opportunity, the UE sends the PSFCHs in one of the following orders:

PSFCHs used for HARQ feedback, PSFCHs used for providing conflict information, and PSFCHs used for beam feedback;

PSFCHs used for HARQ feedback, PSFCHs used for beam feedback, and PSFCHs used for providing conflict information.

For example, for the priority order "PSFCHs used for HARQ feedback, PSFCHs used for providing conflict information, and PSFCHs used for beam feedback": firstly, PSFCHs with the smallest priority value and used for HARQ feedback among the Nt PSFCHs are sent; then, in a case where there are PSFCHs used for providing conflict information, the UE sends the PSFCHs with the smallest priority value and used for providing conflict information among the remaining PSFCHs in the Nt PSFCHs; and finally, in a case where there are PSFCHs used for beam feedback, the UE sends the PSFCHs with the smallest priority value and used for beam feedback among the remaining PSFCHs in the Nt PSFCHs.

In a case where the UE indicates the ability to receive Nr PSFCHs at one PSFCH receiving opportunity, the UE receives PSFCHs in one of the following orders:

PSFCHs used for HARQ feedback, PSFCHs used for providing conflict information, and PSFCHs used for beam feedback;

PSFCHs used for HARQ feedback, PSFCHs used for beam feedback, and PSFCHs used for providing conflict information.

In a case where the UE sends Ntx PSFCHs and receives Nrx PSFCHs, and the sent Ntx PSFCHs overlap with the received Nrx PSFCHs in the time domain, the UE selects to only send or receive PSFCHs according to one of the following orders:

PSFCHs used for HARQ feedback, PSFCHs used for providing conflict information, and PSFCHs used for beam feedback;

PSFCHs used for HARQ feedback, PSFCHs used for beam feedback, and PSFCHs used for providing conflict information.

For example, for the priority order "PSFCHs used for HARQ feedback, PSFCHs used for providing collision information, PSFCHs used for beam feedback": in a case where there are one or more PSFCHs used for HARQ feedback, the UE only sends or receives a group of PSFCHs with the smallest priority value among PSFCHs used for HARQ feedback among the Ntx PSFCHs and PSFCHs used for HARQ feedback among the Nrx PSFCHs; in a case where there are no PSFCHs used for HARQ feedback in the Ntx PSFCHs and the Nrx PSFCHs, then the UE only sends or receives a group of PSFCHs with the smallest priority value among the PSFCHs used for providing the collision information among the Ntx PSFCHs and the PSFCHs used for providing the collision information among the Nrx PSFCHs; and in a case where there are no PSFCHs used for providing the collision information in the Ntx PSFCHs and the Nrx PSFCHs, then the UE only sends or receives a group of PSFCHs with the smallest priority value among PSFCHs used for beam feedback among the Ntx PSFCHs and PSFCHs used for beam feedback among the Nrx PSFCHs.

It should be noted that, it is generally considered that beams corresponding to a PSSCH and corresponding to an associated signal or channel (for example, a CSI-RS, a Port-specific Reference Signal (PTRS), a DMRS, a first-stage PSCCH and a DMRS of the first-stage PSCCH, a second-stage PSCCH, and the like) are the same.

In one slot, PSCCH and PSSCH are always transmitted together, and therefore it can be considered that their corresponding beams are the same.

In an embodiment, in a case where the UE receives a PSSCH and beam feedback is enabled, the UE sends a PSFCH on a PSFCH resource corresponding to the PSSCH to indicate the beam feedback information.

In an embodiment, the UE provides whether the UE has the capability to send the beam feedback information.

An information transmission apparatus is also provided in the embodiments, the information transmission apparatus is configured to implement the described embodiments and exemplary implementations, and what has been described will not be elaborated. The term "module", as used hereinafter, is a combination of software and/or hardware capable of realizing a predetermined function. Although the information transmission apparatus described in the following embodiments is preferably implemented by software, implementation of hardware or a combination of software and hardware is also possible and conceived.

Fig. 4 is a structural block diagram of an information transmission apparatus according to an embodiment of the present disclosure. As shown in Fig. 4, the information transmission apparatus includes:

a first receiving module 42, configured to receive a first PSCCH or PSSCH; and
a first sending module 44, configured to send beam feedback information in response to the first PSCCH or PSSCH, wherein the beam feedback information is carried on at least one of: a PSFCH resource corresponding to the first PSSCH; and at least one of following pieces of information of a sent second PSCCH or PSSCH: SCI-1 information, a MAC CE, SCI-2 information.

By means of the technical solution provided in the embodiment of the present disclosure, a first PSCCH or PSSCH (also denoted as PSCCH/PSSCH) is received, and beam feedback information is sent in response to the first PSCCH or PSSCH, wherein the beam feedback information is carried on at least one of: a PSFCH resource corresponding to the first PSSCH; and at least one of following pieces of information of a sent second PSCCH or PSSCH: SCI-1 information, a MAC CE, and SCI-2 information. The embodiments of the present disclosure provide a beam feedback manner applied to the sidelink communication, and therefore, the problem in the related art that beam feedback cannot be performed in a sidelink communication can be solved.

The SCI-1 refers to first-stage Sidelink Control Information, and the SCI-2 refers to second-stage Sidelink Control Information. Generally, the SCI-1 is carried on a PSCCH, and the SCI-2 is carried on a PSSCH.

In an exemplary embodiment, the information transmission apparatus may be further configured to, in a case where the beam feedback information is carried on the PSFCH resource corresponding to the first PSSCH, indicate the beam feedback information through a cyclic shift of a sequence, wherein the beam feedback information includes whether a beam corresponding to the first PSCCH or PSSCH satisfies a requirement.

In an exemplary embodiment, the information transmission apparatus may further include: a determining module, configured to, in a case where a measurement parameter value of a reference signal corresponding to the first PSSCH or the first PSCCH associated with the first PSSCH is greater than a threshold, determine that the beam corresponding to the first PSCCH or PSSCH satisfies the requirement; and in a case where the measurement parameter value of the reference signal corresponding to the first PSSCH or the first PSCCH associated with the first PSSCH is smaller than the threshold, determine that the beam corresponding to the first PSCCH or PSSCH does not satisfy the requirement.

In an exemplary embodiment, the information transmission apparatus may further include: a determining module, configured to determine, according to PSFCH resource configuration information used for beam feedback, $R_{PRB,CS}^{PSFCH}$ PSFCH resources corresponding to the first PSSCH, wherein the $R_{PRB,CS}^{PSFCH}$ PSFCH resources are sequentially numbered firstly according to physical resource block indexes and then according to cyclic shift pair indexes; and

a UE determines a PSFCH resource index used for beam feedback as $(P_{ID} + M_{ID}) \bmod R_{PRB,CS}^{PSFCH}$, wherein $P_{ID}$ is a physical layer source Identifier (ID) provided by Sidelink Control Information (SCI) corresponding to the first PSSCH; for beam feedback information, $M_{ID}=0$; and the PSFCH resource configuration information used for beam feedback includes at least one of: a PSFCH configuration period T, a frequency domain Physical Resource Block (PRB) set occupied by a PSFCH, and the number of cyclic shift pairs corresponding to the PSFCH.

In an exemplary embodiment, the information transmission apparatus may further include: a determining module, configured to determine $R_{PRB,CS}^{PSFCH}$ PSFCH resources corresponding to the first PSSCH, wherein the $R_{PRB,CS}^{PSFCH}$ PSFCH resources are sequentially numbered firstly according to physical resource block indexes and then according to cyclic shift pair indexes; and

a UE determines a PSFCH resource index used for beam feedback as $(P_{ID} + M_{ID}) \bmod R_{PRB,CS}^{PSFCH}$, wherein $P_{ID}$ is a physical layer source ID provided by SCI corresponding to the first PSSCH; for beam feedback information, $M_{ID}$ is equal to 0; or, in a case where the UE detects that a value of a transmission type indication field of a Channel State Information (CSI) format 2-A is 01, $M_{ID}$ is equal to a higher-layer indicated identifier of a UE which receives the first PSSCH, otherwise, $M_{ID}$ is equal to 0; and the UE uses a cyclic shift $m_{cs}$ of a sequence transmitted by a PSFCH to indicate whether the beam corresponding to the first PSCCH or PSSCH satisfies the requirement.

In an exemplary embodiment, the information transmission apparatus may further include: a determining module, configured to determine $R_{PRB,CS}^{PSFCH}$ PSFCH resources corresponding to the first PSSCH, wherein the $R_{PRB,CS}^{PSFCH}$ PSFCH resources are sequentially numbered firstly according to physical resource block indexes and then according to cyclic shift pair indexes; and the UE determines a PSFCH resource index used for beam feedback as $(P_{ID} + M_{ID}) \mathrm{mod} R_{PRB,CS}^{PSFCH}$, wherein $P_{ID}$ is a physical layer source ID provided by SCI corresponding to the first PSSCH; for beam feedback information, $M_{ID}$ is equal to a fixed value X, and for Hybrid Automatic Repeat reQuest (HARQ) feedback information, $M_{ID}$ is equal to a fixed value Y

In an exemplary embodiment, the information transmission apparatus may further include: a determining module configured to determine, by a UE, $R_{PRB,CS}^{PSFCH}$ PSFCH resource corresponding to the first PSSCH, wherein the $R_{PRB,CS}^{PSFCH}$ PSFCH resources are sequentially numbered firstly according to physical resource block indexes and then according to cyclic shift pair indexes; a higher-layer entity configures or pre-configures, for the UE, an offset $\Delta m_0$ of an initial cyclic shift of a PSFCH sequence used for beam feedback relative to an initial cyclic shift $m_0$ corresponding to HARQ feedback; and code division between the PSFCH used for beam feedback and the PSFCH used for HARQ feedback are achieved by different initial cyclic shifts.

In an exemplary embodiment, the information transmission apparatus may further include: a determining module, configured to, in a case where the beam corresponding to the first PSCCH or PSSCH satisfies the requirement, use a cyclic shift of a sequence transmitted by a PSSCH to indicate that the beam corresponding to the first PSCCH or PSSCH satisfies the requirement; and in a case where the beam corresponding to the first PSCCH or PSSCH does not satisfy the requirement, perform no feedback.

In an exemplary embodiment, the information transmission apparatus may further include: a determining module, configured to, in a case where the beam feedback information is carried on the PSFCH resource corresponding to the first PSSCH, indicate the beam feedback information through a complex-valued symbol carried by a sequence, wherein the complex-valued symbol is formed by modulating 1-bit information indicating the beam feedback information, and the beam feedback information includes whether a beam corresponding to the first PSCCH or PSSCH satisfies a requirement.

In an exemplary embodiment, the information transmission apparatus may further include: a determining module, configured to determine, according to PSFCH resource configuration information used for beam feedback, $R_{PRB,CS}^{PSFCH}$ PSFCH resources corresponding to the first PSSCH, wherein the $R_{PRB,CS}^{PSFCH}$ PSFCH resources are sequentially numbered according to frequencies; and the UE determines a PSFCH resource index used for beam feedback as $(P_{ID} + M_{ID}) \mathrm{mod} R_{PRB,CS}^{PSFCH}$, wherein $P_{ID}$ is a physical layer source ID provided by SCI corresponding to the first PSSCH; for beam feedback information, $M_{ID}=0$; and the PSFCH resource configuration information used for beam feedback includes at least one of: a PSFCH configuration period, a frequency domain position of each PSFCH resource, and a time domain symbol of the PSFCH resource.

In an exemplary embodiment, at least one of the following information is further indicated in the first PSCCH or PSSCH: whether HARQ feedback is enabled; and whether beam feedback is enabled.

In an exemplary embodiment, the determining module may be further configured to, in a case where a measurement parameter value of a reference signal corresponding to the first PSCCH or PSSCH is greater than a threshold, use a first cyclic shift and a second cyclic shift to respectively indicate an Acknowledgement (ACK) and a Non-Acknowledgement (NACK); and in a case where the measurement parameter value of the reference signal corresponding to the first PSCCH or PSSCH is smaller than or equal to the threshold, use a third cyclic shift and a fourth cyclic shift to respectively indicate the ACK and the NACK.

In an exemplary embodiment, the determining module may be further configured to, in a case where a measurement parameter value of a reference signal corresponding to the first PSCCH or PSSCH is greater than a threshold, use a first cyclic shift and a second cyclic shift to respectively indicate an ACK and a NACK; and in a case where the measurement parameter value of the reference signal corresponding to the first PSCCH or PSSCH is smaller than or equal to the threshold, perform no feedback.

In an exemplary embodiment, the determining module may be further configured to, in a case where a measurement parameter value of a reference signal corresponding to the first PSCCH or PSSCH is greater than a threshold and PSSCH reception is correct, use a cyclic shift to indicate an ACK; and in a case where the measurement parameter value of the reference signal corresponding to the first PSCCH or PSSCH is greater than or smaller than the threshold or the PSSCH reception is incorrect, perform no feedback.

In an exemplary embodiment, the determining module may be further configured to, in a case where an HARQ-ACK value is ACK, control a UE to use a cyclic shift to indicate an ACK; in a case where the HARQ-ACK value is NACK and the beam satisfies the requirement, control the UE to use another cyclic shift to indicate an NACK; and in a case where the HARQ-ACK value is NACK and the beam does not satisfy the requirement, control the UE to perform no feedback.

In an exemplary embodiment, the determining module may be further configured to, in a case where the beam feedback information is carried on the PSFCH resource corresponding to the first PSSCH, indicate HARQ feedback and the beam feedback information through a complex-valued symbol carried by a sequence, wherein the complex-valued symbol is formed by modulating 1-bit or 2-bit information indicating the HARQ feedback and the beam feedback information, and the beam feedback information includes whether a beam corresponding to the first PSCCH or PSSCH satisfies a requirement.

In an exemplary embodiment, the determining module may be further configured to, in a case where a measurement parameter value of a reference signal corresponding to the first PSCCH or PSSCH is greater than a threshold, use a first bit value and a second bit value to respectively indicate an ACK and a NACK; and in a case where the measurement parameter value of the reference signal corresponding to the first PSCCH or PSSCH is not greater than the threshold, use a third bit value and a fourth bit value to respectively indicate the ACK and the NACK.

In an exemplary embodiment, the determining module may be further configured to, in a case where a measurement parameter value of a reference signal corresponding to the first PSCCH or PSSCH is greater than a threshold, use a first bit value and a second bit value to respectively indicate an ACK and a NACK; and in a case where the measurement parameter value of the reference signal corresponding to the first PSCCH or PSSCH is not greater than the threshold, perform no feedback.

In an exemplary embodiment, the determining module may be further configured to, in a case where a measurement parameter value of a reference signal corresponding to the first PSCCH or PSSCH is greater than a threshold and PSSCH reception is correct, use a bit value to indicate an ACK; and in a case where the measurement parameter value of the reference signal corresponding to the first PSCCH or PSSCH is not greater than the threshold or the PSSCH reception is incorrect, perform no feedback.

In an exemplary embodiment, the determining module may be further configured as follows: in a case where the beam feedback information is carried on the sent second PSCCH or PSSCH, specifically, on the SCI-1 information, or the MAC CE, or the SCI-2 information on the sent second PSCCH or PSSCH, the beam feedback information includes not only beam information corresponding to the first PSCCH or PSSCH, but also includes beam information corresponding to a PSCCH or PSSCH before the first PSCCH or PSSCH. The determining module may be further configured as one of the following: the beam feedback information includes: whether a beam corresponding to the first PSCCH or PSSCH satisfies a requirement; or the beam feedback information includes a measurement parameter value; or the beam feedback information includes at least one of: an index of a beam with strongest Reference Signal Received Power (RSRP), a strongest measurement parameter value, and a differential measurement parameter value using the strongest measurement parameter value as a reference; or the beam feedback information includes at least one of: an index of a beam, and a measurement parameter value; or the beam feedback information includes at least one of: an index of a beam, a measurement parameter value, a strongest measurement parameter value, a differential measurement parameter value using the strongest measurement parameter value as a reference, and the number of beams to be fed back; or the beam feedback information includes at least one of: an index of a beam, a measurement parameter value, a strongest measurement parameter value, a difference measurement parameter value using the strongest measurement parameter value as a reference, and the number of beams to be fed back.

In an exemplary embodiment, the determining module may be further configured to determine the beam feedback information according to a configured or preconfigured beam reporting configuration, wherein the beam reporting configuration includes at least one of: a measurement parameter to be fed back, the number of beams to be fed back, whether group-based beam feedback is enabled, and a reference signal configuration.

In an exemplary embodiment, the determining module may be further configured or indicated through a higher-layer signaling concerning whether a PSFCH contains the beam feedback information or whether beam feedback is enabled.

In an exemplary embodiment, the first sending module may be further configured to, in a case where a UE receives a PSSCH, and sidelink control information associated with the PSSCH, or the PSSCH, or a higher-layer signalling configuration indicates that beam feedback is enabled, control the UE to send the beam feedback information on a resource corresponding to the PSSCH.

In an exemplary embodiment, the first sending module may be further configured to, in a case where it is configured through a higher-layer signalling that beam feedback is enabled, when a PSSCH is received, and sidelink control information associated with the PSSCH or the PSSCH indicates that beam feedback is enabled, control a UE to send the beam feedback information on a resource corresponding to the PSSCH.

In an exemplary embodiment, the first sending module may be further configured to, in a case where the sidelink control information associated with the PSSCH indicates that HARQ feedback is required, multiplex and send the beam feedback information and HARQ feedback information together on the resource corresponding to the PSSCH.

In an exemplary embodiment, the first sending module may be further configured to send the beam feedback information is sent in a delay window subsequent to transmission of the first PSCCH or PSSCH, wherein the delay window is obtained in one of the following manners:

the delay window is obtained based on configuration or pre-configuration; a first emerging PSFCH feedback resource at least M slots subsequent to the first PSCCH or PSSCH is determined based on a time domain position of the received first PSCCH or PSSCH; or the delay window provided by a UE receiving the beam feedback information is obtained.

It should be noted that the beam feedback information in the embodiments of the present disclosure includes: whether a beam corresponding to the first PSCCH or PSSCH satisfies a requirement; or

the beam feedback information includes a measurement parameter value; or

the beam feedback information includes at least one of: an index of a beam with strongest RSRP, a strongest measurement parameter value, and a differential measurement parameter value using the strongest measurement parameter value as a reference; or

the beam feedback information includes at least one of: an index of a beam and a measurement parameter value; or

the beam feedback information includes at least one of: an index of a beam, a measurement parameter value, a strongest measurement parameter value, a differential measurement parameter value using the strongest measurement parameter value as a reference, and the number of beams to be fed back; or

the beam feedback information includes at least one of: an index of a beam, a measurement parameter value, a strongest measurement parameter value, a difference measurement parameter value using the strongest measurement parameter value as a reference, and the number of beams to be fed back..

In an exemplary embodiment, the information transmission apparatus is further configured to:

in a case where the UE receives a PSSCH and beam feedback is enabled, control the UE to indicate, in the delay window subsequent to the PSSCH, the beam feedback information through a MAC CE, a sidelink control channel, or a higher-layer signalling.

In an exemplary embodiment, the described determining module may be further configured to use the first PSCCH or PSSCH to indicate whether beam feedback is enabled through sidelink control information associated with the first PSSCH, or a MAC CE, or a higher-layer signalling.

Fig. 5 is another structural block diagram of an information transmission apparatus according to an embodiment of the present disclosure. As shown in Fig. 5, the information transmission apparatus includes:

a second sending module 52, configured to send the first PSCCH or PSSCH; and
a second receiving module 54, configured to receive beam feedback information sent in response to the first PSCCH or PSSCH, wherein the beam feedback information is carried on at least one of: a PSFCH resource corresponding to the first PSSCH; and at least one of following pieces of information of a sent second PSCCH or PSSCH: SCI-1 information, a MAC CE, and SCI-2 information.

By means of the technical solution provided in the embodiment of the present disclosure, a first PSCCH or PSSCH (also denoted as PSCCH/PSSCH) is sent, and beam feedback information sent in response to the first PSCCH or PSSCH is received, wherein the beam feedback information is carried on at least one of: a PSFCH resource corresponding to the first PSSCH; and at least one of following pieces of information of a sent second PSCCH or PSSCH: SCI-1 information, a MAC CE, and SCI-2 information. The embodiments of the present disclosure provide a beam feedback manner applied to the sidelink communication, and therefore, the problem in the related art that beam feedback cannot be performed in a sidelink communication can be solved.

In an exemplary embodiment, the described second receiving module may be further configured to, in a case where a User Equipment (UE) sends a PSSCH and indicates that beam feedback is enabled, receive the beam feedback information on a resource corresponding to the PSSCH, wherein the beam feedback information includes at least one of: whether a beam corresponding to the PSSCH satisfies a requirement, an index of the beam, a measurement parameter value, an index of a beam with strongest Reference Signal Received Power (RSRP), a strongest measurement parameter value, and a differential measurement parameter value using the strongest measurement parameter value as a reference, and the number of beams to be fed back.

In an exemplary embodiment, the second receiving module may be further configured to indicate whether beam feedback is enabled through sidelink control information associated with the first PSSCH or through the first PSSCH or through a higher-layer signalling; or, in a case where it is configured through a higher-layer signaling that beam feedback is enabled, further indicate whether the beam feedback is enabled through sidelink control information associated with the first PSSCH or through the first PSSCH.

In an exemplary embodiment, the information transmission apparatus may be further configured to, in a case where the beam feedback information is carried on the PSFCH resource corresponding to the first PSSCH, indicate the beam feedback information through a cyclic shift of a sequence, wherein the beam feedback information includes whether a beam corresponding to the first PSCCH or PSSCH satisfies a requirement; or

in a case where the beam feedback information is carried on the PSFCH resource corresponding to the first PSSCH, indicate the beam feedback information through a complex-valued symbol carried by a sequence, wherein the complex-valued symbol is formed by modulating 1-bit information indicating beam feedback information, and the beam feedback information includes whether a beam corresponding to the first PSCCH or PSSCH satisfies a requirement; or

in a case where the beam feedback information is carried on the PSFCH resource corresponding to the first PSSCH, indicate HARQ feedback and the beam feedback information through a complex-valued symbol carried by a sequence, wherein the complex-valued symbol is formed by modulating 1-bit or 2-bit information indicating the HARQ feedback and the beam feedback information, and the beam feedback information includes whether a beam corresponding to the first PSCCH or PSSCH satisfies a requirement; or

in a case where the beam feedback information is carried on the SCI-1 information, or the MAC CE, or the SCI-2 information on the sent second PSCCH or PSSCH, the beam feedback information further includes beam information corresponding to a PSCCH or PSSCH before the first PSCCH or PSSCH in addition to beam information corresponding to the first PSCCH or PSSCH, wherein the information transmission apparatus includes one of the following: the beam feedback information includes: whether a beam corresponding to the first PSCCH or PSSCH satisfies a requirement; or

the beam feedback information is sent in a delay window subsequent to transmission of the first PSCCH or PSSCH, wherein the delay window is obtained in one of the following manners: the delay window is obtained based on configuration or pre-configuration; a first emerging PSFCH feedback resource at least M slots subsequent to the first PSCCH or PSSCH is determined based on a time domain position of the received first PSCCH or PSSCH; or the delay window provided by a UE receiving the beam feedback information is obtained.

The embodiments of the present disclosure also provide a computer-readable storage medium. The computer-readable storage medium stores a computer program, and the computer program, when running on a processor, causes the processor to execute the operations in any one of the described method embodiments.

In an exemplary embodiment, the computer-readable storage medium may include, but is not limited to, any medium that can store a computer program, such as a Universal Serial Bus (USB) flash drive, a Read-Only Memory (ROM), a Random Access Memory (RAM), a removable hard disk, a magnetic disk, or an optical disc.

Embodiments of the present disclosure further provide an electronic apparatus, including a memory and a processor, wherein the memory stores a computer program, and the processor is configured to run the computer program so as to execute the operations in any one of the method embodiments.

In an exemplary embodiment, the electronic apparatus may further include a transmission device and an input/output device, wherein the transmission device is connected to the processor, and the input/output device is connected to the processor.

For specific examples in this embodiment, reference may be made to the examples described in the foregoing embodiments and exemplary embodiments, and details are not repeatedly described in this embodiment.

Obviously, those having ordinary skill in the art should understand that each module or each operation of the present disclosure can be implemented by a universal computing apparatus, they may be centralized on a single computing apparatus or distributed on a network composed of multiple computing apparatuses, they can be implemented by program codes executable by a computing apparatus, and thus can be stored in a storage apparatus and executed by the computing apparatus. Furthermore, in some cases, the shown or described operations may be executed in an order different from that described here, or they are made into integrated circuit modules respectively, or multiple modules or operations therein are made into a single integrated circuit module for implementation. As such, the present disclosure is not limited to any particular hardware and software combination.

The foregoing descriptions are merely exemplary embodiments of the present disclosure, but are not intended to limit the present disclosure, for those having ordinary skill in the art, the present disclosure may have various modifications and variations. Any modifications, equivalent replacements, improvements and the like made within the principle of the present disclosure shall belong to the scope of protection of the present disclosure.

**Claims**

1.  An information transmission method, comprising:
    receiving a first Physical Sidelink Control Channel, PSCCH, or Physical Sidelink Shared Channel, PSSCH, and sending beam feedback information in response to the first PSCCH or PSSCH, wherein the beam feedback information is carried on at least one of:

    a Physical Sidelink Feedback Channel, PSFCH, resource corresponding to the first PSSCH; and
    at least one of following pieces of information of a sent second PSCCH or PSSCH: first-stage Sidelink Control Information, SCI-1, information, a Media Access Control-Control Element, MAC CE, and second-stage Sidelink Control Information, SCI-2, information.

2.  The information transmission method according to claim 1, further comprising:
    in a case where the beam feedback information is carried on the PSFCH resource corresponding to the first PSSCH, indicating the beam feedback information through a cyclic shift of a sequence, wherein the beam feedback information comprises whether a beam corresponding to the first PSCCH or PSSCH satisfies a requirement.

3.  The information transmission method according to claim 2, further comprising:

    in a case where a measurement parameter value of a reference signal corresponding to the first PSSCH or the first PSCCH associated with the first PSSCH is greater than a threshold, determining that the beam corresponding to the first PSCCH or PSSCH satisfies the requirement;
    in a case where the measurement parameter value of the reference signal corresponding to the first PSSCH or the first PSCCH associated with the first PSSCH is smaller than the threshold, determining that the beam corresponding to the first PSCCH or PSSCH does not satisfy the requirement.

4.  The information transmission method according to claim 2, further comprising:

    determining, by a User Equipment, UE, according to PSFCH resource configuration information used for beam feedback, $R_{PRB,CS}^{PSFCH}$ PSFCH resources corresponding to the first PSSCH, wherein the $R_{PRB,CS}^{PSFCH}$ PSFCH resources are sequentially numbered firstly according to physical resource block indexes and then according to cyclic shift pair indexes; and

    determining, by the UE, a PSFCH resource index used for beam feedback as $(P_{ID} + M_{ID}) \bmod R_{PRB, CS}^{PSFCH}$, wherein $P_{ID}$ is a physical layer source Identifier, ID, provided by Sidelink Control Information, SCI, corresponding to the first PSSCH; for beam feedback information, $M_{ID}=0$; and the PSFCH resource configuration information used for beam feedback comprises at least one of: a PSFCH configuration period T, a frequency domain PRB set occupied by a PSFCH, and the number of cyclic shift pairs corresponding to the PSFCH.

5.  The information transmission method according to claim 2, further comprising:

    determining, by a UE, $R_{PRB,CS}^{PSFCH}$ PSFCH resources corresponding to the first PSSCH, wherein the $R_{PRB,CS}^{PSFCH}$ PSFCH resources are sequentially numbered firstly according to physical resource block indexes and then according to cyclic shift pair indexes; and

    determining, by the UE, a PSFCH resource index used for beam feedback as $(P_{ID} + M_{ID}) \bmod R_{PRB, CS}^{PSFCH}$, wherein $P_{ID}$ is a physical layer source ID provided by SCI corresponding to the first PSSCH; for beam feedback information, $M_{ID}$ is equal to 0; or, in a case where the UE detects that a value of a transmission type indication field of a Channel State Information, CSI, format 2-A is 01, $M_{ID}$ is equal to a higher-layer indicated identifier of a UE which receives the first PSSCH, otherwise, $M_{ID}$ is equal to 0; and the UE uses a cyclic shift $m_{cs}$ of a sequence transmitted by a PSFCH to indicate whether the beam corresponding to the first PSCCH or PSSCH satisfies the requirement.

6. The information transmission method according to claim 2, further comprising:

determining, by a UE, $R_{PRB,CS}^{PSFCH}$ PSFCH resources corresponding to the first PSSCH, wherein the $R_{PRB,CS}^{PSFCH}$ PSFCH resources are sequentially numbered firstly according to physical resource block indexes and then according to cyclic shift pair indexes; and

determining, by the UE, a PSFCH resource index used for beam feedback as $(P_{ID} + M_{ID}) \mod R_{PRB, CS}^{PSFCH}$, wherein $P_{ID}$ is a physical layer source ID provided by SCI corresponding to the first PSSCH; for beam feedback information, $M_{ID}$ is equal to a fixed value X, and for Hybrid Automatic Repeat reQuest, HARQ, feedback information, $M_{ID}$ is equal to a fixed value Y

7. The information transmission method according to claim 2, further comprising:

determining, by a UE, $R_{PRB,CS}^{PSFCH}$ PSFCH resource corresponding to the first PSSCH, wherein the $R_{PRB,CS}^{PSFCH}$ PSFCH resources are sequentially numbered firstly according to physical resource block indexes and then according to cyclic shift pair indexes; a higher-layer entity configures or pre-configures, for the UE, an offset $\Delta m_0$ of an initial cyclic shift of a PSFCH sequence used for beam feedback relative to an initial cyclic shift $m_0$ corresponding to HARQ feedback; and code division between the PSFCH used for beam feedback and the PSFCH used for HARQ feedback are achieved by different initial cyclic shifts.

8. The information transmission method according to claim 2, further comprising:
in a case where the beam corresponding to the first PSCCH or PSSCH satisfies the requirement, using a cyclic shift of a sequence transmitted by a PSSCH to indicate that the beam corresponding to the first PSCCH or PSSCH satisfies the requirement; and in a case where the beam corresponding to the first PSCCH or PSSCH does not satisfy the requirement, performing no feedback.

9. The information transmission method according to claim 1, further comprising:
in a case where the beam feedback information is carried on the PSFCH resource corresponding to the first PSSCH, indicating the beam feedback information through a complex-valued symbol carried by a sequence, wherein the complex-valued symbol is formed by modulating 1-bit information indicating the beam feedback information, and the beam feedback information comprises whether a beam corresponding to the first PSCCH or PSSCH satisfies a requirement.

10. The information transmission method according to claim 9, further comprising:

determining, by a UE, according to PSFCH resource configuration information used for beam feedback, $R_{PRB,CS}^{PSFCH}$ PSFCH resources corresponding to the first PSSCH, wherein the $R_{PRB,CS}^{PSFCH}$ PSFCH resources are sequentially numbered according to frequencies; and

determining, by the UE, a PSFCH resource index used for beam feedback as $(P_{ID} + M_{ID}) \mod R_{PRB, CS}^{PSFCH}$, wherein $P_{ID}$ is a physical layer source ID provided by SCI corresponding to the first PSSCH; for beam feedback information, $M_{ID} = 0$; and the PSFCH resource configuration information used for beam feedback comprises at least one of: a PSFCH configuration period, a frequency domain position of each PSFCH resource, and a time domain symbol of the PSFCH resource.

11. The information transmission method according to claim 1, further comprising:
further indicating, in the first PSCCH or PSSCH, at least one of:

whether HARQ feedback is enabled; and
whether beam feedback is enabled.

12. The information transmission method according to claim 1 or 2, further comprising:

in a case where a measurement parameter value of a reference signal corresponding to the first PSCCH or PSSCH is greater than a threshold, using a first cyclic shift and a second cyclic shift to respectively indicate an Acknowledgement, ACK, and a Non-Acknowledgement, NACK; and in a case where the measurement parameter value of the reference signal corresponding to the first PSCCH or PSSCH is smaller than or equal to the threshold, using a third cyclic shift and a fourth cyclic shift to respectively indicate the ACK and the NACK; or
in a case where a measurement parameter value of a reference signal corresponding to the first PSCCH or PSSCH is greater than a threshold, using a first cyclic shift and a second cyclic shift to respectively indicate an ACK and a NACK; and in a case where the measurement parameter value of the reference signal corresponding to the first PSCCH or PSSCH is smaller than or equal to the threshold, performing no feedback; or
in a case where a measurement parameter value of a reference signal corresponding to the first PSCCH or PSSCH is greater than a threshold and PSSCH reception is correct, using a cyclic shift to indicate an ACK; and in a case where the measurement parameter value of the reference signal corresponding to the first PSCCH or PSSCH is greater than or smaller than the threshold or the PSSCH reception is incorrect, performing no feedback; or
in a case where an HARQ-ACK value is ACK, using, by a UE, a cyclic shift to indicate an ACK; in a case where the HARQ-ACK value is NACK and the beam satisfies the requirement, using, by the UE, another cyclic shift to indicate an NACK; and in a case where the HARQ-ACK value is NACK and the beam does not satisfy the requirement, performing, by the UE, no feedback.

13. The information transmission method according to claim 1, further comprising:
in a case where the beam feedback information is carried on the PSFCH resource corresponding to the first PSSCH, indicating HARQ feedback and the beam feedback information through a complex-valued symbol carried by a sequence, wherein the complex-valued symbol is formed by modulating 1-bit or 2-bit information indicating the HARQ feedback and the beam feedback information, and the beam feedback information comprises whether a beam corresponding to the first PSCCH or PSSCH satisfies a requirement.

14. The information transmission method according to claim 13, further comprising:

in a case where a measurement parameter value of a reference signal corresponding to the first PSCCH or PSSCH is greater than a threshold, using a first bit value and a second bit value to respectively indicate an ACK and a NACK; and in a case where the measurement parameter value of the reference signal corresponding to the first PSCCH or PSSCH is not greater than the threshold, using a third bit value and a fourth bit value to respectively indicate the ACK and the NACK; or
in a case where a measurement parameter value of a reference signal corresponding to the first PSCCH or PSSCH is greater than a threshold, using a first bit value and a second bit value to respectively indicate an ACK and a NACK; and in a case where the measurement parameter value of the reference signal corresponding to the first PSCCH or PSSCH is not greater than the threshold, performing no feedback; or
in a case where a measurement parameter value of a reference signal corresponding to the first PSCCH or PSSCH is greater than a threshold and PSSCH reception is correct, using a bit value to indicate an ACK; and in a case where the measurement parameter value of the reference signal corresponding to the first PSCCH or PSSCH is not greater than the threshold or the PSSCH reception is incorrect, performing no feedback.

15. The information transmission method according to claim 1, wherein

in a case where the beam feedback information is carried on the SCI-1 information, or the MAC CE, or the SCI-2 information on the sent second PSCCH or PSSCH, the beam feedback information further comprises beam information corresponding to a PSCCH or PSSCH before the first PSCCH or PSSCH in addition to beam information corresponding to the first PSCCH or PSSCH; and
the information transmission method comprises one of the following:

the beam feedback information comprises: whether a beam corresponding to the first PSCCH or PSSCH satisfies a requirement; or
the beam feedback information comprises a measurement parameter value; or
the beam feedback information comprises at least one of: an index of a beam with strongest Reference Signal Received Power, RSRP, a strongest measurement parameter value, and a differential measurement parameter value using the strongest measurement parameter value as a reference; or
the beam feedback information comprises at least one of: an index of a beam, and a measurement parameter value; or

the beam feedback information comprises at least one of: an index of a beam, a measurement parameter value, a strongest measurement parameter value, a differential measurement parameter value using the strongest measurement parameter value as a reference, and the number of beams to be fed back; or the beam feedback information comprises at least one of: an index of a beam, a measurement parameter value, a strongest measurement parameter value, a difference measurement parameter value using the strongest measurement parameter value as a reference, and the number of beams to be fed back.

16. The information transmission method according to claim 1, further comprising:
determining the beam feedback information according to a configured or preconfigured beam reporting configuration, wherein the beam reporting configuration comprises at least one of: a measurement parameter to be fed back, the number of beams to be fed back, whether group-based beam feedback is enabled, and a reference signal configuration.

17. The information transmission method according to claim 1, further comprising:
whether a PSFCH contains the beam feedback information or whether beam feedback is enabled being configured or indicated through a higher-layer signalling.

18. The information transmission method according to claim 1, further comprising:
in a case where a UE receives a PSSCH, and sidelink control information associated with the PSSCH, or the PSSCH, or a higher-layer signalling configuration indicates that beam feedback is enabled, sending, by the UE, the beam feedback information on a resource corresponding to the PSSCH.

19. The information transmission method according to claim 1, further comprising:
in a case where it is configured through a higher-layer signalling that beam feedback is enabled, when a PSSCH is received, and sidelink control information associated with the PSSCH or the PSSCH indicates that beam feedback is enabled, sending, by a UE, the beam feedback information on a resource corresponding to the PSSCH.

20. The information transmission method according to claim 18 or 19, further comprising:
in a case where the sidelink control information associated with the PSSCH indicates that HARQ feedback is required, multiplexing and sending the beam feedback information and HARQ feedback information together on the resource corresponding to the PSSCH.

21. The information transmission method according to claim 1, further comprising:
sending the beam feedback information in a delay window subsequent to transmission of the first PSCCH or PSSCH, wherein the delay window is obtained in one of the following manners:

the delay window is obtained based on configuration or pre-configuration;
a first emerging PSFCH feedback resource at least M slots subsequent to the first PSCCH or PSSCH is determined based on a time domain position of the received first PSCCH or PSSCH; or
the delay window provided by a UE receiving the beam feedback information is obtained.

22. The information transmission method according to claim 21, further comprising:
in a case where the UE receives a PSSCH and beam feedback is enabled, indicating, by the UE in the delay window subsequent to the PSSCH, the beam feedback information through a MAC CE, a sidelink control channel, or a higher-layer signalling.

23. The information transmission method according to claim 21, further comprising:
the first PSCCH or PSSCH indicates whether beam feedback is enabled through sidelink control information associated with the first PSSCH, or a MAC CE, or a higher-layer signalling.

24. An information transmission method, comprising:
sending a first Physical Sidelink Control Channel, PSCCH, or Physical Sidelink Shared Channel, PSSCH, and receiving beam feedback information sent in response to the first PSCCH or PSSCH, wherein the beam feedback information is carried on at least one of:

a Physical Sidelink Feedback Channel, PSFCH, resource corresponding to the first PSSCH; and
at least one of following pieces of information of a sent second PSCCH or PSSCH: first-stage Sidelink Control Information, SCI-1, information, a Media Access Control-Control Element, MAC CE, and second-stage Sidelink Control Information, SCI-2, information.

25. The information transmission method according to claim 24, further comprising:
in a case where a User Equipment, UE, sends a PSSCH and indicates that beam feedback is enabled, receiving the beam feedback information on a resource corresponding to the PSSCH, wherein the beam feedback information comprises at least one of: whether a beam corresponding to the PSSCH satisfies a requirement, an index of the beam, a measurement parameter value, an index of a beam with strongest Reference Signal Received Power, RSRP, a strongest measurement parameter value, and a differential measurement parameter value using the strongest measurement parameter value as a reference, and the number of beams to be fed back.

26. The information transmission method according to claim 24, further comprising:

indicating whether beam feedback is enabled through sidelink control information associated with the first PSSCH or through the first PSSCH or through a higher-layer signalling; or,

in a case where it is configured through a higher-layer signaling that beam feedback is enabled, further indicating whether the beam feedback is enabled through sidelink control information associated with the first PSSCH or through the first PSSCH.

27. The information transmission method according to claim 24, further comprising:

in a case where the beam feedback information is carried on the PSFCH resource corresponding to the first PSSCH, indicating the beam feedback information through a cyclic shift of a sequence, wherein the beam feedback information comprises whether a beam corresponding to the first PSCCH or PSSCH satisfies a requirement; or

in a case where the beam feedback information is carried on the PSFCH resource corresponding to the first PSSCH, indicating the beam feedback information through a complex-valued symbol carried by a sequence, wherein the complex-valued symbol is formed by modulating 1-bit information indicating beam feedback information, and the beam feedback information comprises whether a beam corresponding to the first PSCCH or PSSCH satisfies a requirement; or

in a case where the beam feedback information is carried on the PSFCH resource corresponding to the first PSSCH, indicating HARQ feedback and the beam feedback information through a complex-valued symbol carried by a sequence, wherein the complex-valued symbol is formed by modulating 1-bit or 2-bit information indicating the HARQ feedback and the beam feedback information, and the beam feedback information comprises whether a beam corresponding to the first PSCCH or PSSCH satisfies a requirement; or

in a case where the beam feedback information is carried on the SCI-1 information, or the MAC CE, or the SCI-2 information on the sent second PSCCH or PSSCH, the beam feedback information further comprises beam information corresponding to a PSCCH or PSSCH before the first PSCCH or PSSCH in addition to beam information corresponding to the first PSCCH or PSSCH, wherein the information transmission method comprises one of the following: the beam feedback information comprises: whether a beam corresponding to the first PSCCH or PSSCH satisfies a requirement; or

sending the beam feedback information in a delay window subsequent to transmission of the first PSCCH or PSSCH, wherein the delay window is obtained in one of the following manners: the delay window is obtained based on configuration or pre-configuration; a first emerging PSFCH feedback resource at least M slots subsequent to the first PSCCH or PSSCH is determined based on a time domain position of the received first PSCCH or PSSCH; or the delay window provided by a UE receiving the beam feedback information is obtained.

28. An information transmission apparatus, comprising:

a first receiving module, configured to receive a first Physical Sidelink Control Channel, PSCCH, or Physical Sidelink Shared Channel, PSSCH; and

a first sending module, configured to send beam feedback information in response to the first PSCCH or PSSCH, wherein the beam feedback information is carried on at least one of:

a Physical Sidelink Feedback Channel, PSFCH, resource corresponding to the first PSSCH; and

at least one of following pieces of information of a sent second PSCCH or PSSCH: first-stage Sidelink Control Information, SCI-1, information, a Media Access Control-Control Element, MAC CE, and second-stage Sidelink Control Information, SCI-2, information.

29. An information transmission apparatus, comprising:

a second sending module configured to send a first Physical Sidelink Control Channel, PSCCH, or Physical Sidelink Shared Channel, PSSCH; and
a second receiving module, configured to receive beam feedback information sent in response to the first PSCCH or PSSCH, wherein the beam feedback information is carried on at least one of:

a Physical Sidelink Feedback Channel, PSFCH, resource corresponding to the first PSSCH; and
at least one of following pieces of information of a sent second PSCCH or PSSCH: first-stage Sidelink Control Information, SCI-1, information, a Media Access Control-Control Element, MAC CE, and second-stage Sidelink Control Information, SCI-2, information.

30. A computer-readable storage medium, wherein the computer-readable storage medium stores a computer program, and the computer program, when running on a processor, causes the processor to execute the information transmission method according to any one of claims 1 to 23 or the information transmission method according to any one of claims 24 to 27.

31. An electronic apparatus, comprising a memory and a processor, wherein the memory stores a computer program, and the processor is configured to run the computer program so as to execute the information transmission method according to any one of claims 1 to 23, or the information transmission method according to any one of claims 24 to 27.

**Fig. 1**

Input/output device 108

Transmission device 106

Processor 102

Memory 104

**Fig. 2**

Receiving a first PSCCH or PSSCH, and sending beam feedback information in response to the first PSCCH or PSSCH, wherein the beam feedback information is carried on at least one of: a PSFCH resource corresponding to the first PSSCH; and at least one of following pieces of information of a sent second PSCCH or PSSCH: SCI-1 information, MAC CE, SCI-2 information

S202

**Fig. 3**

Sending a first PSCCH or PSSCH, and receiving beam feedback information sent in response to the first PSCCH or PSSCH, wherein the beam feedback information is carried on at least one of: a PSFCH resource corresponding to the first PSSCH; and at least one of following pieces of information of a sent second PSCCH or PSSCH: SCI-1 information, MAC CE, SCI-2 information

S302

**Fig. 4**

First receiving module 42

First sending module 44

Information transmission apparatus

**Fig. 5**

Second sending module 52

Second receiving module 54

Information transmission apparatus

## INTERNATIONAL SEARCH REPORT

| | International application No. |
|---|---|
| | **PCT/CN2023/084159** |

**A.  CLASSIFICATION OF SUBJECT MATTER**

H04W 16/28(2009.01)i

According to International Patent Classification (IPC) or to both national classification and IPC

**B.  FIELDS SEARCHED**

Minimum documentation searched (classification system followed by classification symbols)

IPC:H04W H04L H04B

Documentation searched other than minimum documentation to the extent that such documents are included in the fields searched

Electronic data base consulted during the international search (name of data base and, where practicable, search terms used)

CNTXT; CNABS; VEN; USTXT; EPTXT; WOTXT; CNKI: 边链路, 侧链路, 控制信道, 共享信道, 反馈信道, 波束, 反馈, 优选, 最佳, PSCCH, PSSCH, PSFCH, control channel, shared channel, feedback channel, feedback, beam, optimal, best, SCI, MAC CE

**C.  DOCUMENTS CONSIDERED TO BE RELEVANT**

| Category* | Citation of document, with indication, where appropriate, of the relevant passages | Relevant to claim No. |
|---|---|---|
| X | WO 2021034572 A1 (CONVIDA WIRELESS L.L.C.) 25 February 2021 (2021-02-25) description, paragraphs [0108]-[0136] | 1-31 |
| X | WO 2022011551 A1 (QUALCOMM INC. et al.) 20 January 2022 (2022-01-20) description, paragraphs [0108]-[0138] | 1-31 |
| X | US 2022046430 A1 (QUALCOMM INC.) 10 February 2022 (2022-02-10) description, paragraphs [0049]-[0054] | 1-31 |
| A | CN 112004210 A (GUANGDONG OPPO MOBILE COMMUNICATIONS CO., LTD.) 27 November 2020 (2020-11-27) entire document | 1-31 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 June 2023** | **23 July 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/084159**

| Patent document cited in search report | | | Publication date (day/month/year) | Patent family member(s) | Publication date (day/month/year) |
|---|---|---|---|---|---|
| WO | 2021034572 | A1 | 25 February 2021 | None | |
| WO | 2022011551 | A1 | 20 January 2022 | None | |
| US | 2022046430 | A1 | 10 February 2022 | None | |
| CN | 112004210 | A | 27 November 2020 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210385010